(19)

Europäisches
Patentamt

European
Patent Office

Office européen
des brevets

(11)     **EP 2 653 955 B1**

(12)     **EUROPEAN PATENT SPECIFICATION**

(45) Date of publication and mention
of the grant of the patent:
**08.02.2017   Bulletin 2017/06**

(51) Int Cl.:
*G06F 3/023* (2006.01)      *G06F 3/048* (2013.01)

(21) Application number: **12164300.1**

(22) Date of filing: **16.04.2012**

(54) **Method and device having touchscreen keyboard with visual cues**

Verfahren und Vorrichtung mit Berührungsbildschirmtastatur mit visuellen Hinweisen

Procédé et dispositif doté d'un clavier tactile avec des repères visuels

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.10.2013   Bulletin 2013/43**

(73) Proprietor: **BlackBerry Limited
Waterloo, ON N2K 0A7 (CA)**

(72) Inventors:
• **Griffin, Jason Tyler
Waterloo, Ontario N2L 3W8 (CA)**
• **Hamilton, Alistair Robert
Waterloo, Ontario N2L 3W8 (CA)**

• **Pasquero, Jerome
Waterloo, Ontario N2L 3W8 (CA)**

(74) Representative: **MERH-IP Matias Erny Reichl
Hoffmann
Patentanwälte PartG mbB
Paul-Heyse-Strasse 29
80336 München (DE)**

(56) References cited:
**EP-A2- 1 567 927        EP-A2- 2 146 271
US-A1- 2005 024 341      US-A1- 2008 304 890
US-A1- 2008 316 183      US-A1- 2009 085 881
US-A1- 2009 265 669      US-A1- 2010 079 413
US-A1- 2011 043 455      US-A1- 2011 099 506
US-A1- 2011 302 518**

EP 2 653 955 B1

**Description**

RELATED APPLICATION DATA

The present disclosure relates to commonly owned U.S. patent application no. 13/373,356, filed November 10, 2011.

TECHNICAL FIELD

The present disclosure relates generally to input methodologies for electronic devices, such as handheld electronic devices, and more particularly, to a method and device for touchscreen keyboard with visual cues.

BACKGROUND

Increasingly, electronic devices, such as computers, netbooks, cellular phones, smart phones, personal digital assistants, tablets, etc., have touchscreens that allow a user to input characters into an application, such as a word processor or email application. Character input on touchscreens can be a cumbersome task due to, for example, the small touchscreen area, particularly where a user needs to input a long message.

In US 2009/0265669 methods, systems, devices and apparatus are disclosed including computer program products, for inputting text. A user interface element is presented on a touch-sensitive display of a device. The user interface element is associated with a plurality of characters, at least a subset of which is associated with respective gestures. A user input performing a gesture with respect to the user interface element is received. The character from the subset that is associated with the gesture performed with respect to the user interface element is inputted. US020080304890A1 relates to a character input method and apparatus for automatically switching an input mode in a terminal having a touch screen. If a press event occurs in one of key regions displayed in the touch screen, it is determined whether a drag event occurs prior to occurrence of a release event.

In US 2009/0085881 A1 the determination of an orientation of a finger touching a touch-sensitive device is disclosed. In one example, a computing device comprises a display screen configured to display an image to a user, and an intensity-sensitive touch-sensing input mechanism configured to detect one or more objects touching the display screen. The device also comprises a controller configured to determine an orientation of a finger touching the screen from a direction between a center of a first set of touch data and a center of a second set of touch data, and to adjust an image on the display screen in response to a determined orientation of the finger.

The current invention provides a method for providing visual cues according to claim 1, an electronic device according to claim 7 and a computer program product according to claim 8. These are an improvement over the prior art, since the display of the visual cue is such that the chance of the visual cue being obscured by an input implement may be reduced.

**BRIEF DESCRIPTION OF THE DRAWINGS**

Fig. 1 is an example block diagram of an electronic device, consistent with embodiments disclosed herein.

Fig. 2 is a flowchart illustrating an example method for predicting a selected set of characters, consistent with embodiments disclosed herein.

Figs. 3A, 3B, 3C, and 3D show example front views of a touchscreen, consistent with embodiments disclosed herein.

Figs. 4A and 4B show example front views of a touchscreen, consistent with embodiments disclosed herein.

Fig. 5 shows an example front view of a touchscreen, consistent with embodiments disclosed herein.

Figs. 6A, 6B, and 6C show example front views of a touchscreen, consistent with embodiments disclosed herein.

Fig. 7 shows an example front view of a touchscreen, consistent with embodiments disclosed herein.

Figs. 8A and 8B show example front views of a touchscreen, consistent with embodiments disclosed herein.

Fig. 9 shows an example front view of a touchscreen, consistent with embodiments disclosed herein.

Figs. 10A and 10B show example front views of a touchscreen, consistent with embodiments disclosed herein.

Figs. 11A and 11B show example front views of a touchscreen, consistent with embodiments disclosed herein.

Figs. 12A and 12B show example front views of a touchscreen, consistent with embodiments disclosed herein.

Figs. 13A and 13B show example front views of a touchscreen, consistent with embodiments disclosed herein.

Figs. 14A, 14B, and 14C show example front views of a touchscreen, consistent with embodiments disclosed herein.

Fig. 15 shows an example front view of a touchscreen, consistent with embodiments disclosed herein.

Fig. 16 shows an example front view of a touchscreen, consistent with embodiments disclosed herein.

Fig. 17 is a flowchart illustrating an example method, consistent with embodiments disclosed herein.

Fig. 18 is a flowchart illustrating an example method, consistent with embodiments disclosed herein.

Fig. 19 is a flowchart illustrating an example method, consistent with embodiments disclosed herein.

Fig. 20 shows an example front view of a virtual keyboard for display on a touchscreen, consistent with embodiments disclosed herein.

Fig. 21 shows an example front view of a virtual keyboard for display on a touchscreen, consistent with embodiments disclosed herein.

Fig. 22 is a flowchart illustrating an example method, consistent with embodiments disclosed herein.

Figs. 23 to 24 show example front views of a virtual keyboard for display on a touchscreen, consistent with embodiments disclosed herein.

Fig. 25 illustrates a Cartesian dimensional coordinate system suitable for mapping locations of the touchscreen and determining a shape of the contact area of the user's finger in accordance with one embodiment of the present disclosure.

Figs. 26 to 28 show example front views of a virtual keyboard for display on a touchscreen, consistent with embodiments disclosed herein.

Fig. 29 is a flowchart illustrating an example method, consistent with embodiments disclosed herein.

Fig. 30 shows an example front view of a virtual keyboard for display on a touchscreen, consistent with embodiments disclosed herein.

Fig. 31 is a flowchart illustrating an example method, consistent with embodiments disclosed herein.

DESCRIPTION OF EXAMPLES USEFUL FOR UNDERSTANDING THE INVENTION

Reference will now be made in detail to various examples, examples of which are illustrated in the accompanying drawings. Wherever possible, the same reference numbers will be used throughout the drawings to refer to the same or like parts.

The present disclosure relates to an electronic device, including wired communication devices (for example, a laptop computer having a touchscreen) and mobile or handheld wireless communication devices such as cellular phones, smartphones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device.

Basic predictive text input solutions have been introduced for assisting with input on an electronic device. These solutions include predicting which word a user is entering and offering a suggestion for completing the word. But these solutions can have limitations, often requiring the user to input most or all of the characters in a word before the solution suggests the word the user is trying to input. Even then, a user often has to divert focus from the keyboard to view and consider the suggested word displayed elsewhere on the display of the electronic device, and thereafter, look back at the keyboard to continue typing. Refocusing of one's eyes relative to the keyboard while inputting information in an electronic device, particularly when composing large texts, can strain the eyes and be cumbersome, distracting, and otherwise inefficient. Moreover, processing cycles are lost and display power wasted as the processor is idling while the user is focusing attention to the input area, and then back at the virtual keyboard.

The efficiency of predictive text input solutions, from the perspective of both device resources and user experience, sometimes depends on the particular user and the nature of the interaction of the particular user with the touchscreen. Virtual keyboard usage patterns can be broadly categorized as being of two types:

"rapid" and "precise". Rapid typists are typically fast two-thumb typists which rely on auto-correction. This usage pattern corresponds most closely with experienced, frequent touchscreen users. Precise typists are typically careful typists who are inclined to use a single finger point to tap keys in the virtual keyboard, and often choose predictions as an input accelerator rather than auto-correction. This usage pattern corresponds most closely with novice/new touchscreen users as well as potentially one-handed (thumb) use situations.

Accordingly, examples described herein permit the user of an electronic device to input characters without diverting attention from the keyboard and subsequently refocusing. Examples described herein also seek to accommodate different user types, such as rapid typists and precise typists, and the different efficiency challenges presented by the different user types.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", or "said," particularly after a feature has been introduced with the indefinite article, is meant to include one or more than one of the feature to which it refers (unless otherwise indicated). Therefore, the term "the generated set of characters" as used in "displaying the generated set of characters" includes displaying one or more generated set of characters. References to orientation contained herein, such as horizontal and vertical, are relative to the screen orientation of a graphical user interface rather than any physical orientation.

In accordance with one example, there is provided a method comprising receiving an input of a character from a virtual keyboard rendered on a display; generating one or more sets of predicted input characters based on the input character; and displaying one or more of the generated sets of predicted input characters.

In accordance with one example, there is provided a method for providing a virtual keyboard rendered on a display with visual cues, comprising: detecting a touch input associated with a user interface element rendered on the display; determining an input direction of the touch input; and displaying on the display a visual cue associated with the user interface element, wherein the visual cue is located at a position based on the input direction of the touch input.

In accordance with a further example, there is provided a method for providing visual cues rendered on a display, comprising: detecting a touch input associated with a user interface element rendered on the display; determining whether the touch input is associated with a left hand or a right hand of a user; and displaying on the display a visual cue associated with the user interface element, wherein the visual cue is located at a position based on whether the touch input is associated with the left hand or the right hand.

In a further example, an electronic device is provided that comprises a display having a virtual keyboard rendered thereupon, and a processor. The processor can be configured to perform methods described herein.

In a further example, a keyboard rendered on a display of an electronic device is provided. The keyboard can include a plurality of keys, each key corresponding to one or more different characters of a plurality of characters. The keyboard is configured to perform methods described herein in response to receiving an input.

In a further example, a non-transitory computer-readable storage medium is provided that includes computer executable instructions for performing methods described herein.

These examples that are useful for understanding the invention, as well as those described below, permit the user of an electronic device to input a set of characters without diverting attention from the virtual keyboard and subsequently refocusing. Predicting and providing various options that the user is likely contemplating, and doing so at appropriate locations on the keyboard, allows the focus to remain on the keyboard, which enhances efficiency, accuracy, and speed of character input.

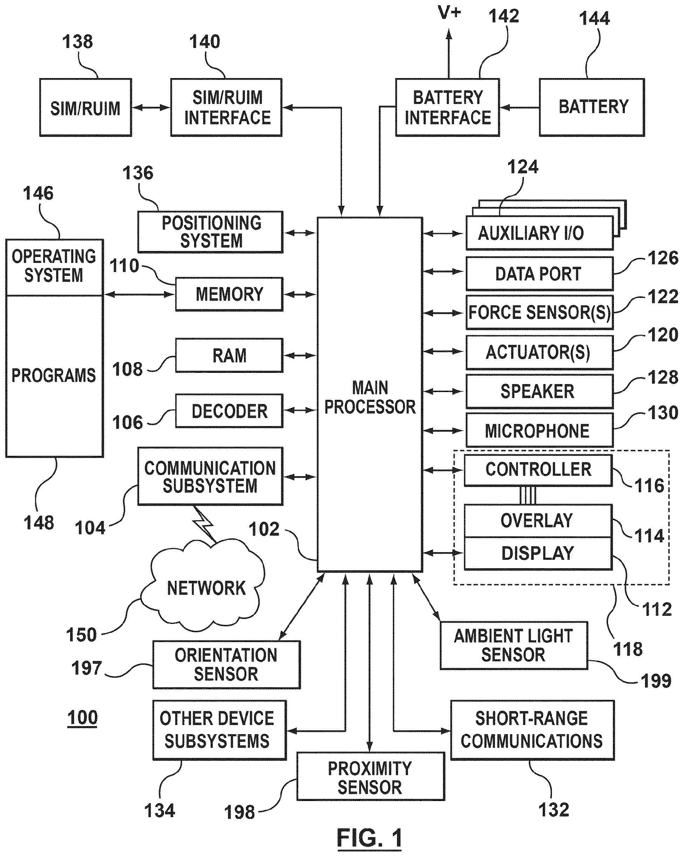

Fig. 1 is a block diagram of an electronic device 100, consistent with examples disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; other device subsystems 134; and a touchscreen 118.

Touchscreen 118 includes a display 112 with a touch-active overlay 114 connected to a controller 116. User-interaction with a graphical user interface (GUI), such as a virtual keyboard rendered on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touchscreen 118 via main processor 102. Characters are inputted when the user touches the touchscreen at a location associated with said character.

Touchscreen 118 is connected to and controlled by main processor 102. Accordingly, detection of a touch event and/or determining the location of the touch event can be performed by main processor 102 of electronic device 100. A touch event includes in some embodiments, a tap by a finger, a swipe by a finger, a swipe by a stylus, a long press by finger or stylus, or a press by a finger for a predetermined period of time, and the like.

While specific examples of a touchscreen have been described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given examples will depend on the electronic device and its particular application and demands.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

Main processor 102 can also interact with an orientation sensor 197 for sensing the orientation of the device. In some examples, the orientation sensor 197 may be one or more accelerometers. In some examples, the orientation sensor may detect acceleration along multiple orthogonal axes. Main processor 102 can also interact with one or more proximity sensors 198 for detecting the proximity of nearby objects. In some examples, the proximity sensor may be one or more infrared emitter/sensor pairs. The main processor 102 can also interact with an ambient light sensor 199 for detecting the intensity and/or color temperature of ambient light.

In some examples, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

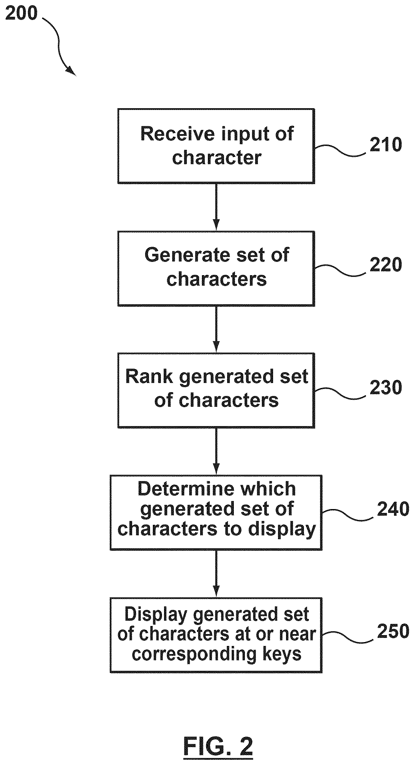

Fig. 2 is a flowchart illustrating an example method 200 for predicting a set of characters, consistent with example embodiments disclosed herein. As used herein, a predictor (such as a predictive algorithm, program or firmware) includes a set of instructions that when executed by a processor (for example, main processor 102), can be used to disambiguate for example, received ambiguous text input and provide various options, such as a set of characters (for example, words or phrases, acronyms, names, slang, colloquialisms, abbreviations, or any combination thereof) that a user might be contemplating. A predictor can also receive otherwise unambiguous text input and predict a set of characters potentially contemplated by the user based on several factors, such as context, frequency of use, and others as appreciated by those skilled in the field.

For example, in the predictor is a program 148 residing in memory 110 of electronic device 100. Accordingly, method 200 includes a predictor for generating a set of characters corresponding to a subsequent candidate input character based on inputted characters. It can be appreciated that while the examples described herein are directed to a predictor program executed by a processor, the predictor can be executed by a virtual keyboard controller.

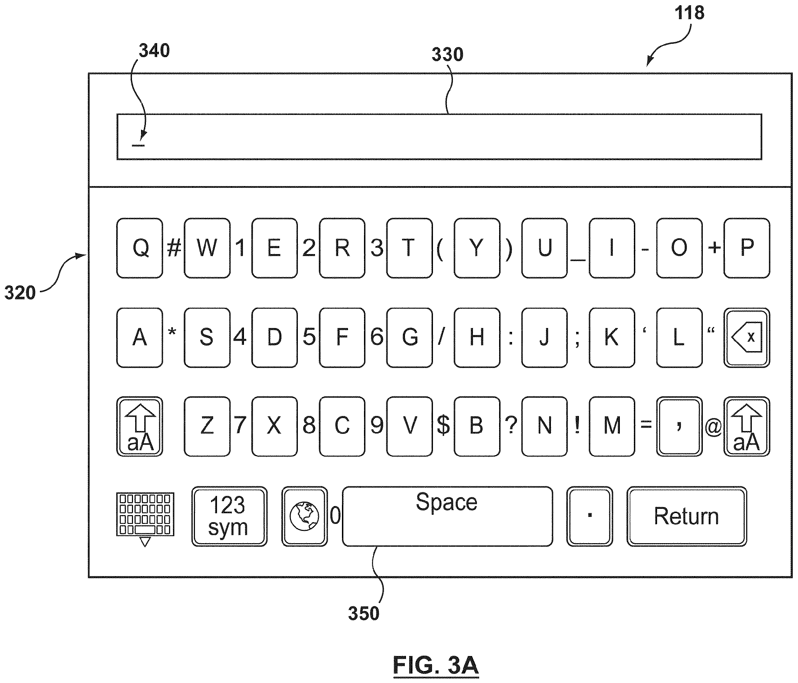

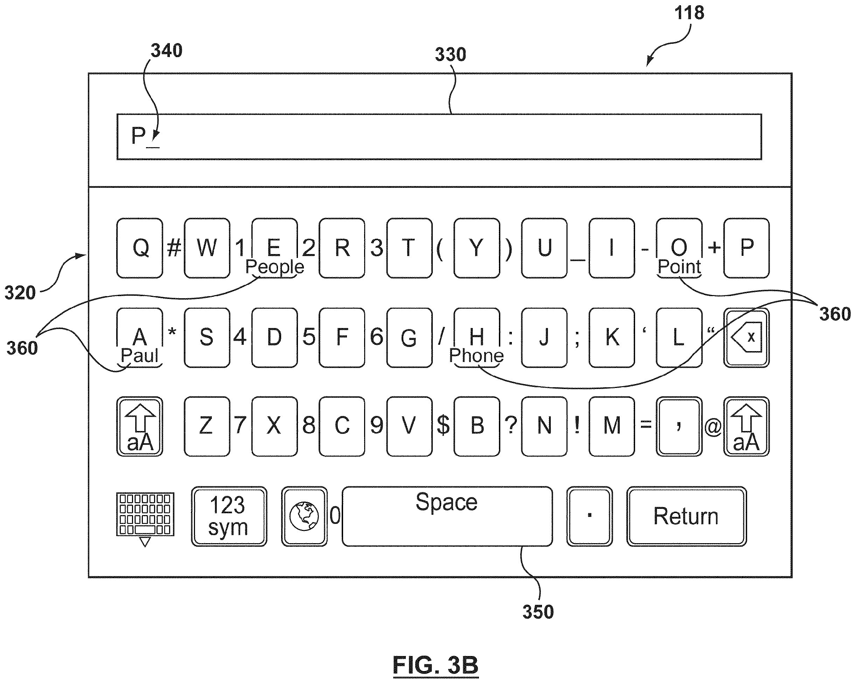

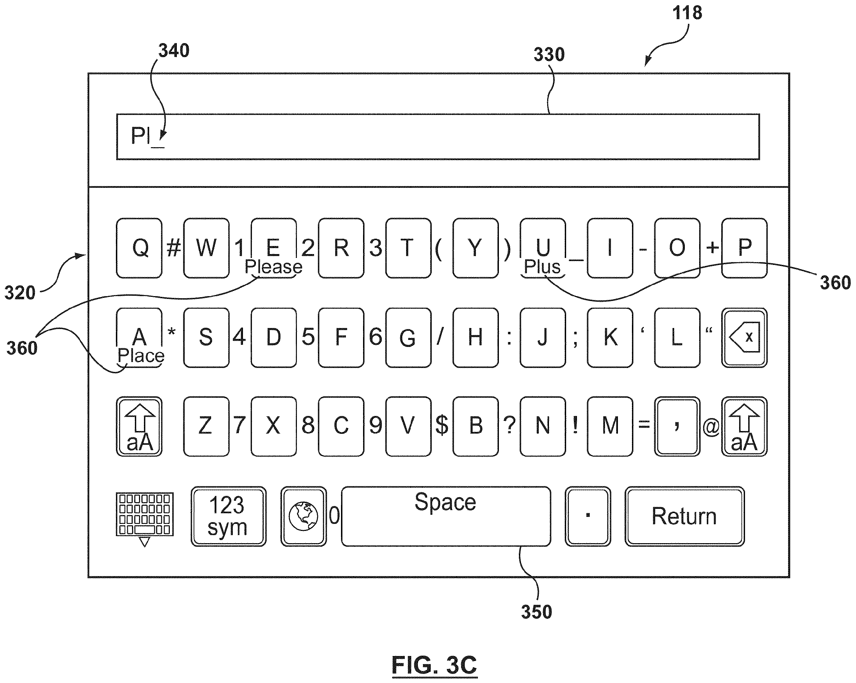

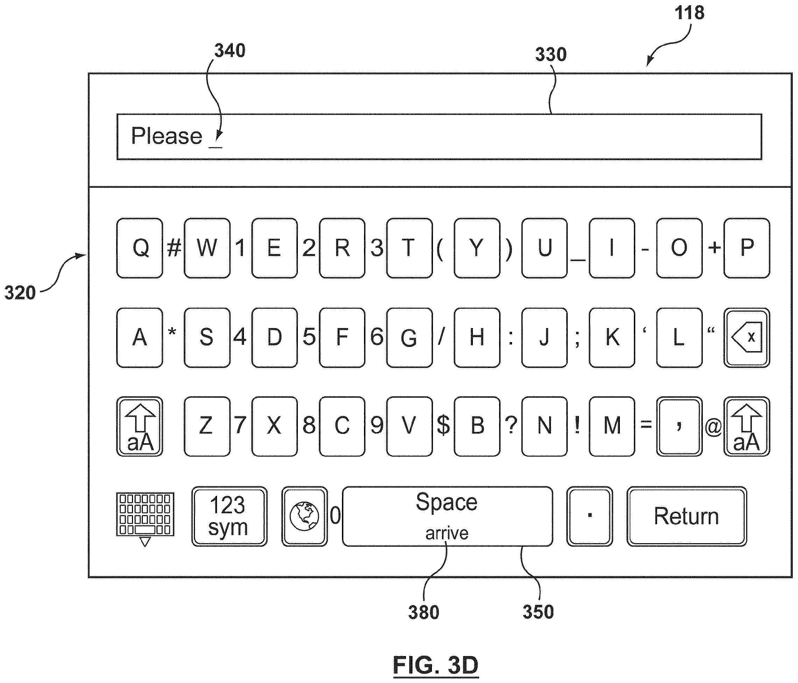

Method 200 begins at block 210, where the processor receives an input of one or more characters from a virtual keyboard displayed on a touchscreen. As used herein, however, a character can be any alphanumeric character, such as a letter, a number, a symbol, a punctuation mark, and the like. The inputted character can be displayed in an input field (for example, input field 330 further described below in Figs. 3-9) that displays the character the user inputs using the virtual keyboard.

At block 220, the processor generates one or more sets of characters such as words or phrases, acronyms, names, slang, colloquialisms, abbreviations, or any combination thereof based on the input received in block 210. The set of characters includes, for example, a set of characters that are stored in a dictionary (for example, a word or an acronym) of a memory of the electronic device, a set of characters that were previously inputted by user (for example, a name or acronym), a set of characters based on a hierarchy or tree structure, a combination thereof, or any set of characters that are selected by a processor based on defined arrangement.

In some examples, the processor can use contextual data for generating a set of characters. Contextual data considers the context of characters in the input field. Contextual data can include information about, for example, set of characters previously inputted by the user, grammatical attributes of the characters inputted in the input field (for example, whether a noun or a verb is needed as the next set of characters in a sentence), or any combination thereof. For example, if the set of characters "the" has already been inputted into display, the processor can use the contextual data to determine that a noun-instead of a verb-will be the next set of characters after "the". Likewise, if the set of characters "Guy Lafleur played in the National Hockey" was inputted, based on the context, the processor can determine the subsequent set of characters is likely "League". Using the contextual data, the processor can also determine whether an inputted character was incorrect. For example, the processor can determine that the inputted character was supposed to be a "w" instead of an "a", given the proximity of these characters on a QWERTY virtual keyboard.

Processor 102 can also include an affix as part of the set of characters, such as an adverb ending, an adjective ending, different verb tenses, and the like, or any other change to make a complete set of characters. Processor 102 can also use the received input to generate affixes, such as plural endings or plural forms. Any known predictive technique or software can be used to process the received input and the contextual data in generating set of characters at block 220.

In some examples , the set of characters generated at block 220 can begin with the same character received as input at block 210. For example, if the characters "pl" have been received as input using a virtual keyboard, these characters will be received by the processor as the input. In these examples, the set of characters generated at block 220 would all begin with "pl", such as "please" or "plot." There is no limit on the length of a generated set of characters. Regarding affixes, if the user has input the characters "child", for example, the affixes generated at block 220 could include "-ren", to make the set of characters "children", or "-ish", to make the set of characters "childish".

In some examples, the set of characters generated at block 220 can simply include the same characters received as input at block 210. For example, if the received input is an "x," the processor may generate "example" or "xylophone" as the set of characters. Such sets of characters can be generated using the contextual data.

In another example, if input has not been received or a delimiter (such as a <SPACE>) has been used, the generated set of characters can be placed on subsequent candidate input characters that correspond to the first letter of the generated set of characters.

Next, at block 230, the generated set of characters from block 220 can be ranked. The rankings reflect the likelihood that a candidate set of characters might have been intended by the user, or might be chosen by a user compared to another candidate set of characters.

In some examples, contextual data can be included in the ranking at block 230. In some examples, the electronic device can be configured to rank nouns or adjectives higher based on the previous inputted set of characters. If the inputted set of characters is suggestive of a noun or adjective, the processor, using the contextual data, can rank the nouns or adjectives corresponding to what the user is typing higher at block 230. In an additional example, set of characters including adjective affixes (such as "-ish" or "-ful"), phrases, plurals, or combinations thereof can also be ranked. Contextual data can increase the likelihood that the higher ranked generated set of characters are intended by a user. In some examples, contextual data can include information about which programs or applications are currently running or being used by a user. For example, if the user is running an email application, then set of characters associated with that user's email system, such as set of characters from the user's contact list, can be used to determine the ranking. N-grams, including unigrams, bigrams, trigrams, and the like, can be also used in the ranking of the sets of characters. Alternatively, the geolocation of the electronic device or user can be used in the ranking process. If, for example, the electronic device recognizes that a user is located at his/her office, then sets of characters generally associated with work can be ranked higher in the list. If, on the other hand, the device determines a user is at the beach, then sets of characters generally associated with the beach can be ranked higher in the list.

At block 240, the processor determines which of the set of characters to display based on the ranking. For example, higher ranked sets of characters are more likely to be determined that they should be displayed. A ranker (such as a ranking algorithm, program or firmware) includes a set of instructions that when executed by a processor (for example, main processor 102), can be executed to determine ranking in this regard. In some examples, the ranker is a program 146 residing in memory 110 of electronic device 100.

At block 250, the determined set of characters is displayed at a location on the keyboard corresponding to a subsequent candidate input character, predicted as the next character in a word that the user might input. For instance, if a user inputs "pl", the word "please" would be displayed on the key for the letter "e"-the subsequent candidate input character for that word. Similarly, the word "plus" would also be displayed on the key for the letter "u"-another subsequent candidate input character. The subsequent candidate input character can be any alphanumeric character, such as a letter, number, symbol, punctuation mark, and the like.

In some examples, the generated set of characters is displayed at or near keys on the virtual keyboard associated with the subsequent candidate input characters. Its placement at or near a key can depend, for instance, on the size of the word or the number of nearby subsequent candidate input characters and the size of their associated set of characters.

The set of characters can be displayed in a manner that will attract the user's attention. In some examples, a displayed set of character's appearance can be enhanced or changed in a way that makes the set more readily visible to the user. For example, displayed sets of characters can be displayed with backlighting, highlighting, underlining, bolding, italicizing, using combinations thereof, or in any other way for making the displayed set of characters more visible.

When identifying the set of characters for display at block 240, the processor can limit the displayed set of characters to the top few or choose among the higher ranked sets of characters. For example, if two sets of characters are both ranked high, and these sets of characters would otherwise be displayed at the same key, the electronic device could be configured to display only the highest ranked generated set of characters. In other examples, both sets of characters could be displayed at or around the same key, or one set of characters is displayed at one key while the second set of characters is displayed at another key. In some examples, the processor can take into account the display size to limit the number of generated sets of characters.

In some examples, the ranking could be used to choose between two or more sets of characters that, when displayed on adjacent subsequent candidate input characters, would overlap with each other (e.g., because of their respective lengths). In such a scenario, the electronic device could be configured to display the higher ranked set of characters on the keyboard. For example, if the set of characters "establishment" is ranked first in a list generated at block 240 after the letter "E" is inputted, "establishment" could be displayed at the "S" key. When displayed on a virtual keyboard, however; its length might occupy some space on the "A" key and the "D" key, potentially blocking a set of characters that would be displayed on or around those keys. At block 240, it could be determined that "establishment" would be displayed fully, and no other set of characters would be placed at the "A" or "D" keys ahead of the first ranked set of characters "establishment." An alternative to displaying only the top ranked set of characters would be to use abbreviations or recognized shortened forms of the set of characters, effectively permitting a long set of characters to be displayed within or mostly within the boundaries of a single key simultaneously with other sets of characters on adjacent keys of a virtual keyboard.

Figures 3-9 illustrate a series of example front views of the touchscreen 118 having a virtual keyboard 320, consistent with examples disclosed herein. Starting with Fig. 3A, touchscreen 118 includes a virtual keyboard 320 that is touch-active. The position of the virtual keyboard 320 is variable such that virtual keyboard 320 can be placed at any location on touchscreen 118. Touchscreen 118 could be configured to detect the location and possibly pressure of one or more objects at the same time. Touchscreen 118 includes two areas: (1) an input field 330 that displays characters after a user has inputted those characters and (2) the virtual keyboard 320 that receives the input from the user. As described throughout this disclosure, a virtual keyboard displays a set of characters at a location on the keyboard corresponding to a subsequent candidate input character that might be received as input from the user.

The examples illustrated in Figures 3-9 can be implemented with any set of characters, such as words, phrases, acronyms, names, slang, colloquialisms, abbreviations, or any combination thereof.

As shown in Fig. 3A, touchscreen 118 displays a standard QWERTY virtual keyboard 320; however, any conventional key configuration can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes space key 350 as well as other keys that can provide different inputs, such as punctuation, letters, numbers, enter or return keys, and function keys. While virtual keyboard 320 is shown as having a square shape, it can have any other shape (such as an arch).

As shown in Fig. 3A, touchscreen 118 displays input field 330, which displays the characters the user inputs using virtual keyboard 320. Input field 330 includes a cursor 340, which can be an underscore (as shown) or any other shape, such as a vertical line. Cursor 340 represents the character space where a next inputted character, selected character, or selected set of characters will be inserted.

As shown in Fig. 3B, when a user inputs a character (in this example, "P"), this character is displayed in input field 330 and cursor 340 moves to the character space where the next inputted character or word will be inserted. After the character is inputted, a predictor (such as, a predictive algorithm or a circuit) can generate set of characters 360 (for this example) that all begin with the character "P", or characters if more than one character is input. The generated set of characters are displayed at a location on the keyboard corresponding to a subsequent candidate input character that might be received as input from the user. As mentioned, generated set of characters 360 can be displayed at or near the key corresponding to the subsequent candidate input characters (for example, under the respective A, E, H, and O keys of the virtual keyboard 320). Indeed, slightly shifting the display location of the generated set of characters can address overcrowding of subsequent candidate input characters, effectively permitting more set of characters to be displayed.

In the example shown in Fig. 3B, "P" is received as input and a predictor generates several set of characters 360, which are displayed at keys corresponding to each generated set of characters' subsequent candidate input character. As shown in Fig. 3B, "People" is placed at the "E" key because the next letter after "P" of "People" is "E"; "Paul" will be place at the "A" key because the next letter after "P" of "Paul" is "A"; "Phone" will be placed at the "H" key because the next letter after "P" of "Phone" is "H"; and so on. It should be noted that any of the letters in the set of characters can be upper case or lower case.

In the example shown in Fig. 3C, "L" is next input received by touchscreen, and a predictor determines several generated set of characters 360, which are displayed at a key corresponding to subsequent candidate input characters (for example, under the respective A, E, and U keys of the virtual keyboard 320), for the current position of cursor 340, which is in the third character position, as shown in input field 330. In another example, a generated set of characters 360 can be presented such as to include the subsequent candidate input character. For example, the set of characters "Please" can be displayed so that the characters "Pl" are displayed before the "E" character on the "E" key, and the characters "ase" can be placed after the "E" character on the "E" key. Further, in this or other examples, the displayed "E" can be presented in a manner that differs from the "Pl" and "ase", thereby enabling the user to still recognize it as the "E" key while also making it readily visible so that the user can either input the generated set of characters "Please" or input the character "E". The "E" can be capitalized or in lowercase. In other examples, an affix can be displayed at the key. Using the example of the set of characters "Please" above, the "ase" could be displayed at the "E" key so the set of characters fragment "-ease" or "-Ease" would appear.

If the user inputs a generated set of characters, that set of characters is placed in input field 330. This can be seen in Fig. 3D, where the user has inputted generated set of characters "Please," resulting in its placement in the input field. A space is inserted after the set of characters if the user wants to input a new set of characters. A user could input a generated set of characters in various ways, including in a way that differs from a manner of inputting a character key. For example, to input a generated set of characters, a user could use a finger or stylus to swipe the generated set of characters. As used herein, swiping includes swiping the set of characters itself or swiping or touching near the set of characters. For the latter example, the device can detect a swipe or touch near a set of characters, be it a generated set of characters or a predicted set of characters (to be described below), and through the use of a predictor, determine the set of characters the user intended to input. In another example, the user could press a key for a predetermined period of time, such as a long press. That key can be, for example, the key corresponding to the subsequent candidate input character of the set of characters. So, if the set of characters "Please" is intended to be inputted instead of "E", the electronic device 100 can be configured to require that the "E" key be pressed for a predetermined period of time to trigger the input of "Please".

After a generated set of characters 360 has been determined, as shown in Fig. 3D, a predicted set of characters 380 can be displayed, shown here at space key 350. Predicted set of characters 380 can differ from generated set of characters 360 (as shown in Figs. 3A-3C) and is the system's attempt to predict the next set of characters a user might be contemplating. A predictor is used to determine predicted set of characters 380. As with displayed generated set of characters 360, predicted set of characters 380 can be received as input in any number of ways, including receiving a swiping of the predicted set of characters with a finger or stylus or receiving a pressing of a key (such as the space key or another designated key) for a predetermined period of time (long press).

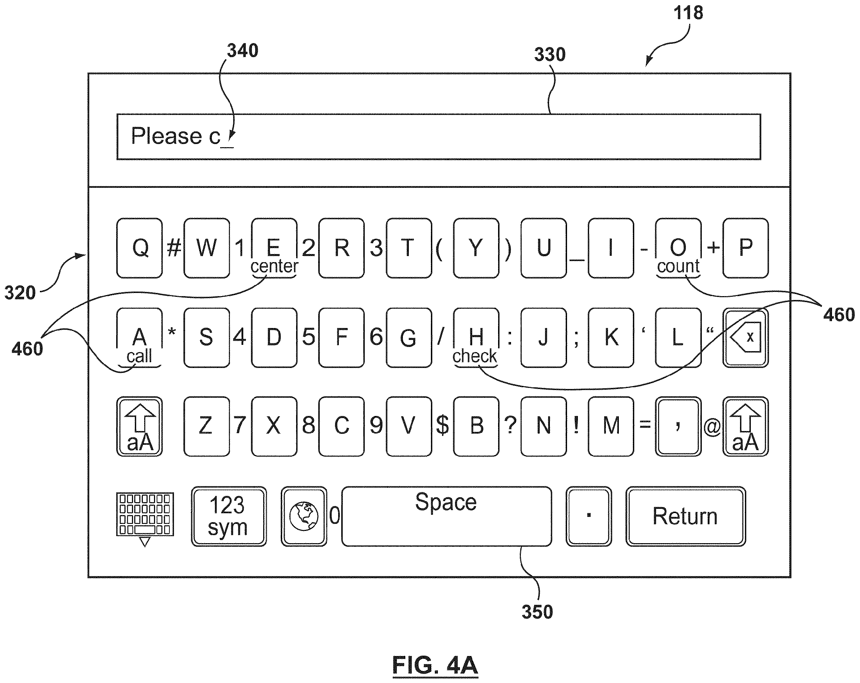

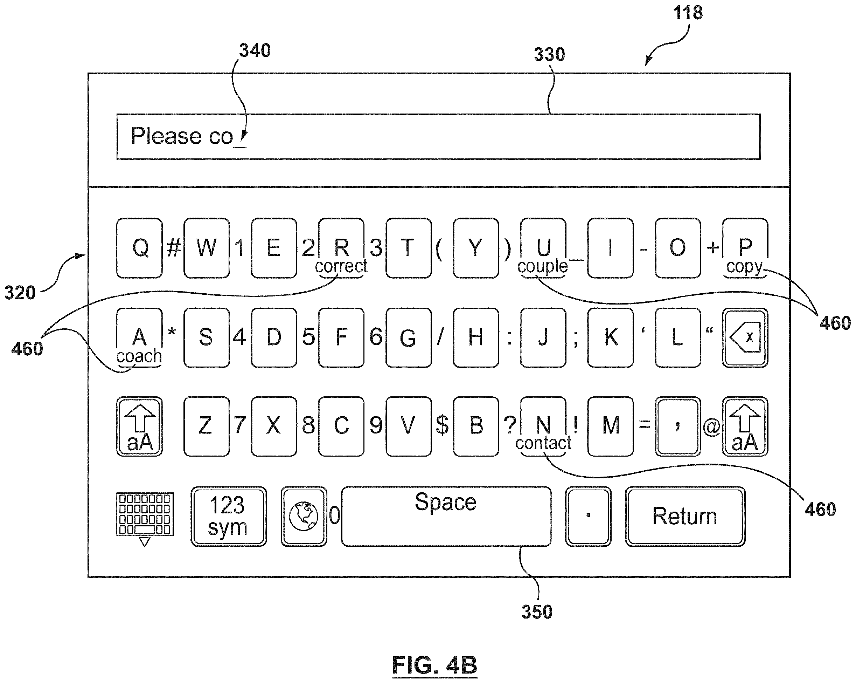

In Fig. 4A, electronic device 100 receives "C" as input from virtual keyboard 320. Again, a predictor determines generated set of characters 460 based in part on the received input. In Fig. 4B, electronic device 100 receives "O" as input from the virtual keyboard and outputs the "O" in input field 330. As shown in Fig. 4A, the set of characters "count" was displayed at the "O" key after the input of the "C" character was received. Since the "O" key was pressed in a manner to only input the "O" character, as shown in Fig. 4B, an "O" is displayed as second character of the currently inputted set of characters, and the set of characters "count" is not inputted by the user. Alternatively, if a user wanted to input the generated set of characters "count," the user can input the "O" key in Fig. 4A in a manner different from a manner of inputting the "O" key, such as by swiping the set of characters "count" or by a long press on the "O" key, as opposed to tapping. Returning to Fig. 4B, after the "O" is inputted, generated set of characters 460 are displayed at the keys corresponding to subsequent candidate input characters, as shown in Fig. 4B.

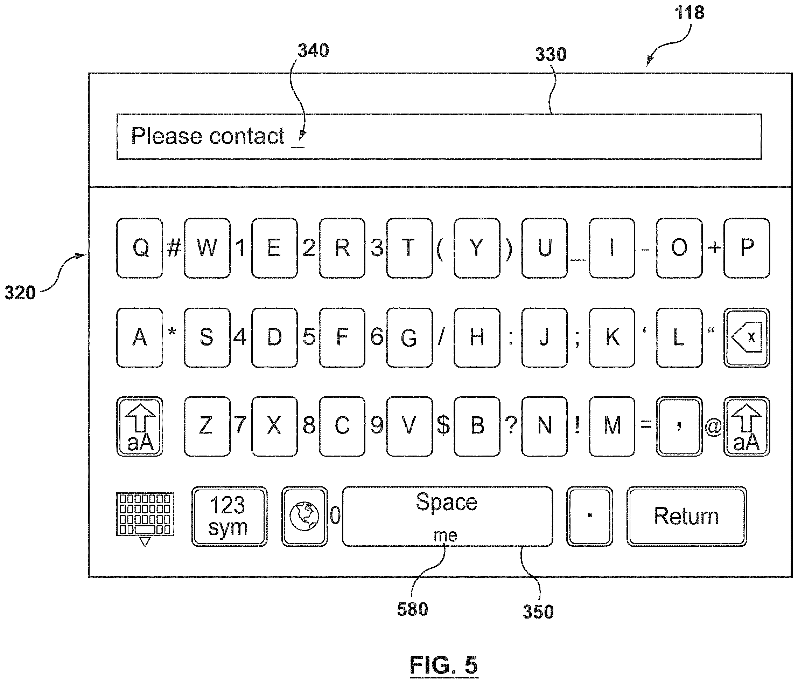

Fig. 5 shows input field 330 displaying the set of characters "contact" followed by a space. In that instance, the user inputted the generated set of characters "contact" 460 as was shown in Fig. 4B at the "N" key. Referring back to Fig. 5, a <SPACE> character is now automatically inserted after the generated word in the input field. Predicted word "me" 580 is now displayed on space key 350.

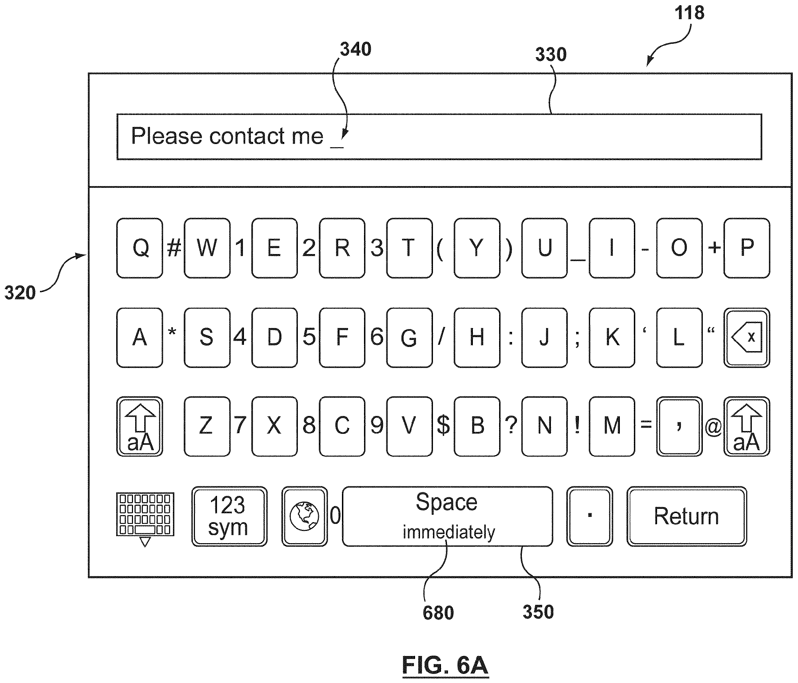

If the predicted word "me" 580 is received as input, the word "me" 580 is then displayed in input field 330 followed by a space as shown in Fig. 6A, which then shows predicted word 680 "immediately" displayed on space key 350. The predicted word is presented after a completed word and space have been displayed in input field 330.

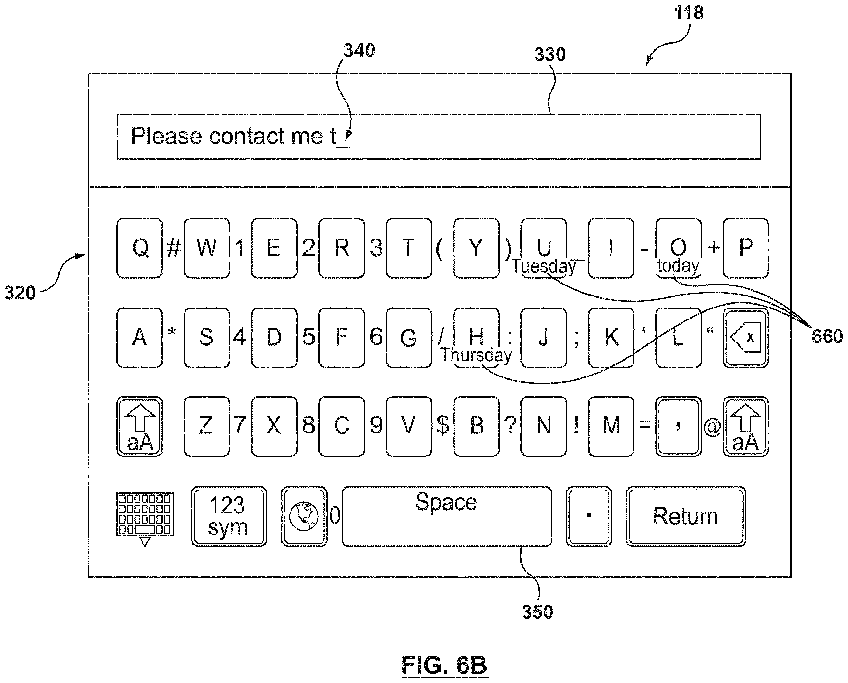

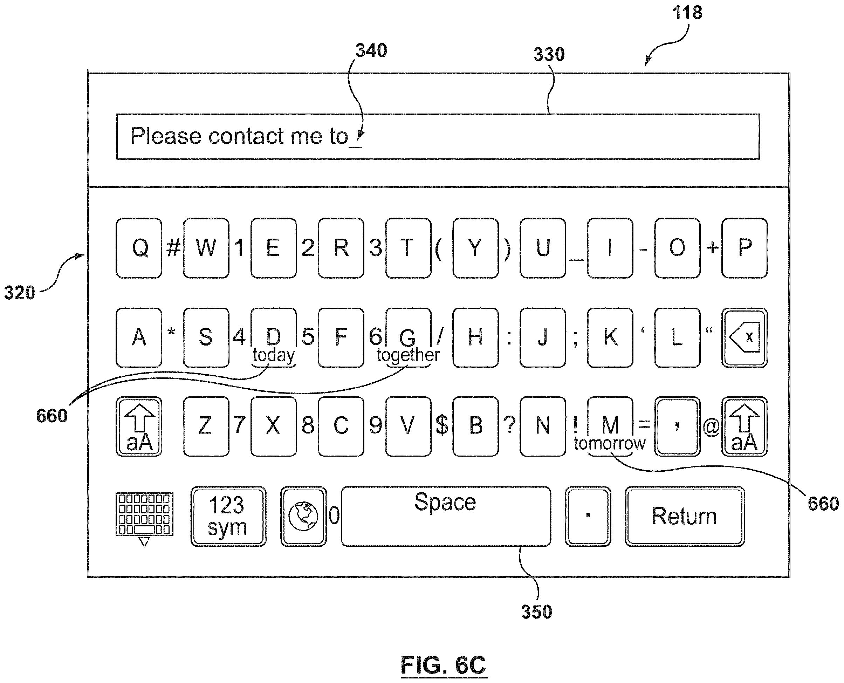

Fig. 6B shows an example where touchscreen 118 has received the "T" character as input after the user has pressed the "T" key. In this scenario, touchscreen 118 displays a "t" in input field 330. Generated set of characters 660 (for example, "Tuesday," "today," and "Thursday") are displayed at the keys of the subsequent candidate input characters. Fig. 6C shows an example where electronic device 100 has received the "o" character as input after the user presses the "O" key instead of inputting generated set of characters 660 "today" as was shown in Fig. 6B. Thus, "O" is now displayed in input field 330.

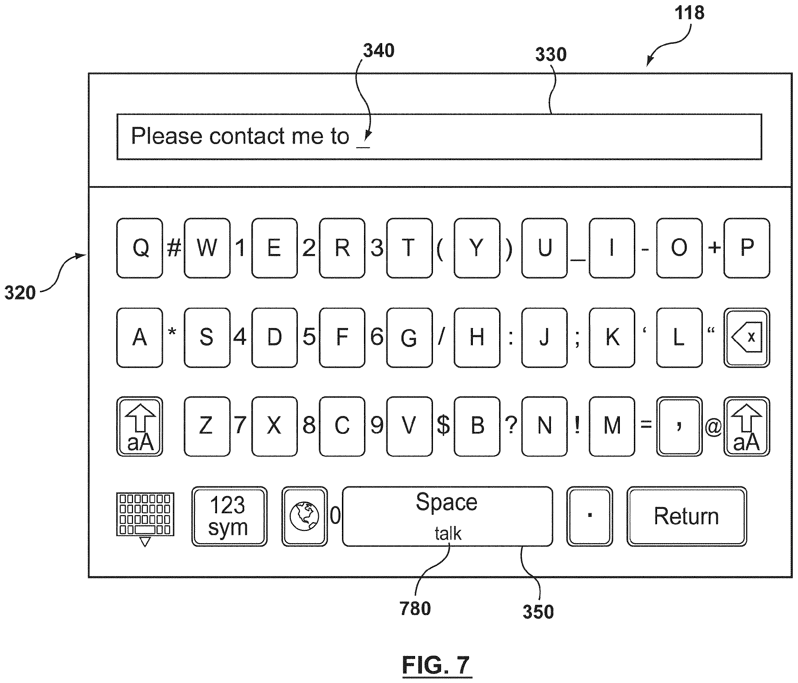

Fig. 7 shows an example where touchscreen 118 has received the <SPACE> character as input after the user selects the space key. In this scenario, touchscreen 118 inserts a <SPACE> character, and then displays predicted set of characters "talk" 780 at space key 350.

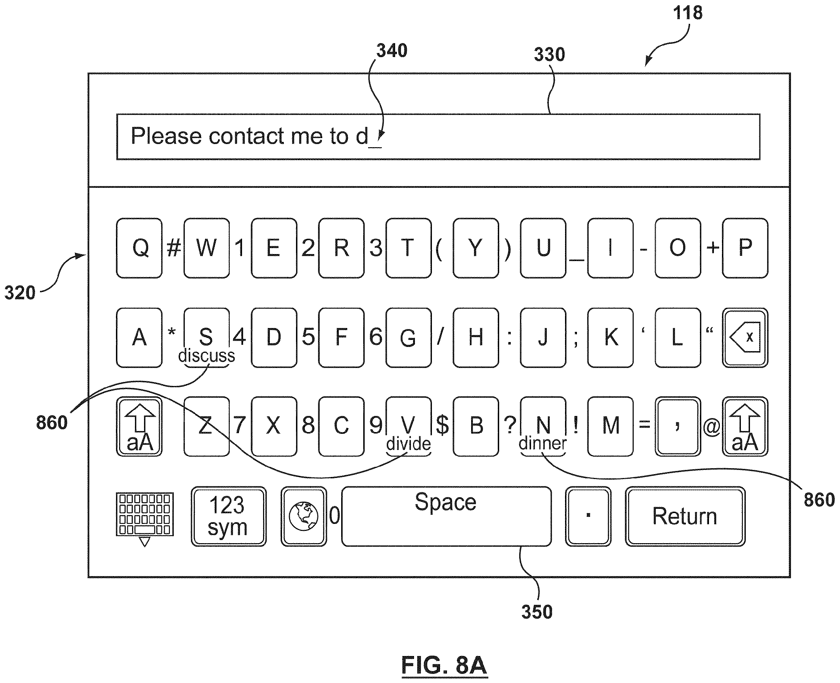

Fig. 8A shows an example where touchscreen 118 has received the "d" character as input after the user presses the "D" key. In this scenario, touchscreen 118 displays a "d" in the input field 330 and displays generated set of characters "discuss," "divide," and "dinner" 860 on keys corresponding to subsequent candidate input characters. In this example, while the character "I" was never received as input, electronic device 100 determined that generated set of characters "discuss," "divide," and "dinner" 860 were the set of characters to be displayed on touchscreen. In this example , because each of these set of characters has "i" as its second letter; touchscreen 118 displayed generated set of characters using a further subsequent letter in the set of characters (for example, "discuss" under the "S" key, "divide" under the "V" key, and "dinner" under the "N" key). In other examples, generated set of characters "discuss," "divide," and "dinner" 860 can be displayed at or near the "I" key.

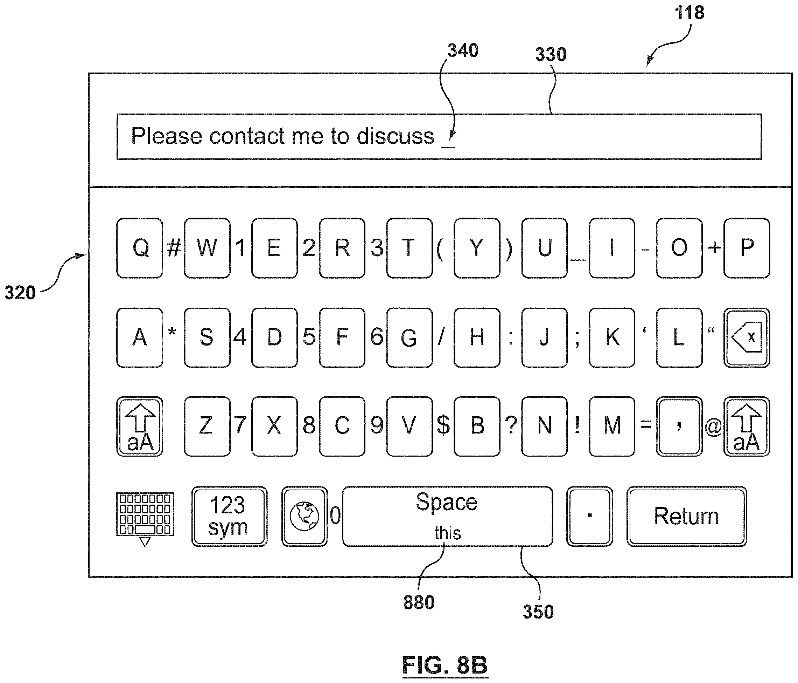

Fig. 8B shows an example where touchscreen 118 has received the set of characters "discuss" as input after the user chooses generated set of characters "discuss" 860. In this example, touchscreen 118 displays predicted set of characters "this" 880 at space key 350.

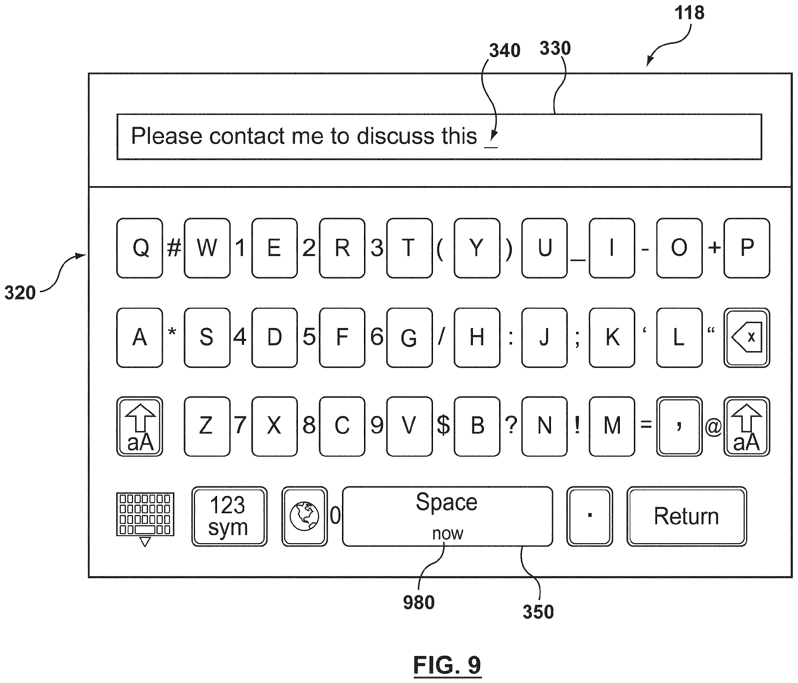

Fig. 9 shows an example where touchscreen 118 receives the "this" set of characters as input after user selects "this" as a desired predicted set of characters 880. In this example, touchscreen 118 displays predicted set of characters "now" 980 at space key 350.

Touchscreen 118 can also receive punctuation as input at any time during the typing of a message. If a user decides to use punctuation after inputting either a generated set of characters or a predicted set of characters, the <SPACE> character (for example, the <SPACE> character prior to cursor 940 of Fig. 9) is deleted and the inputted punctuation is inserted.

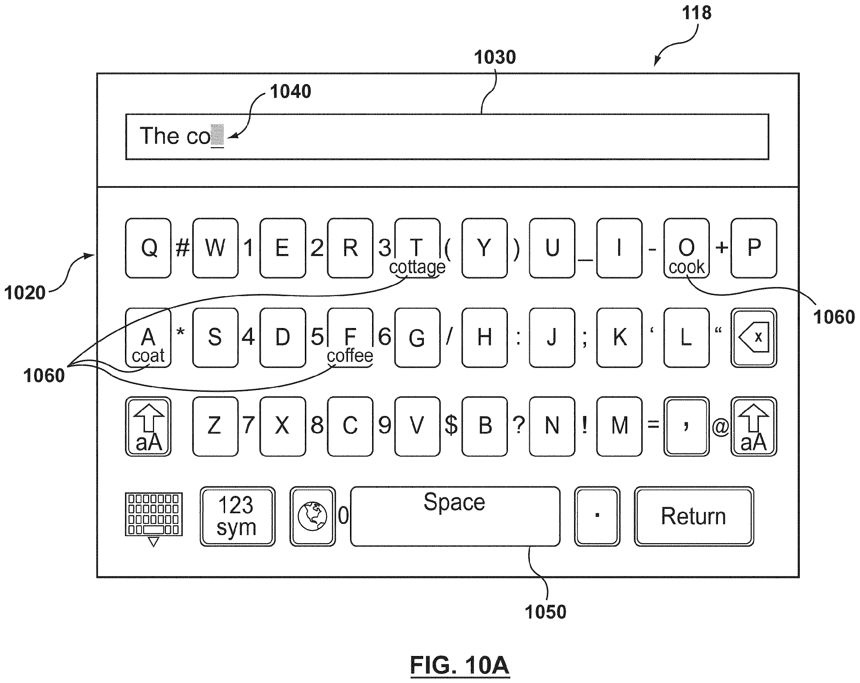

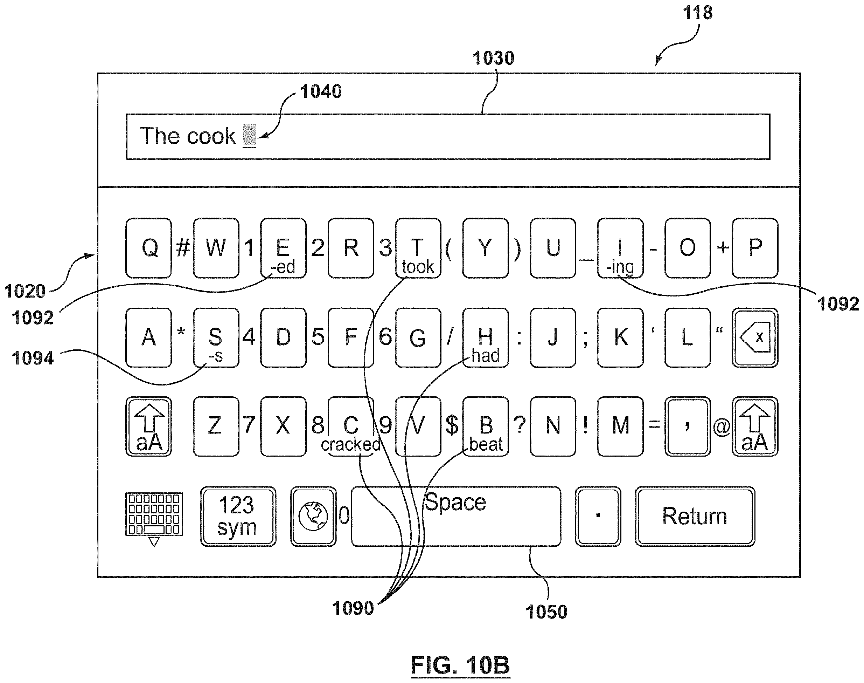

Figs. 10A and 10B show example front views of a touchscreen, consistent with examples disclosed herein. Fig. 10A shows an example where touchscreen 118 displays "The co" in a text bar 1030 and several generated set of characters 1060 are displayed at subsequent candidate input characters. In this example, touchscreen 118 displays generated set of characters "cottage" 1060 under the "T" key, generated set of characters "cook" 1060 under the "O" key, generated set of characters "coat" 1060 under the "A" key, and generated set of characters "coffee" 1060 under the "F" key.

Fig. 10B shows an example where touchscreen 118 receives the set of characters "cook" as input after the user has selected the generated set of characters 1060 "cook." The set of characters "cook" is inserted into input field 1030 along with a <SPACE> character. In this example, set of characters include new predicted set of characters (such as words 1090, affixes 1092 (for example, "-ed" under the "E" key and "-ing" under the "I" key), and plurals 1094 (for example, "-s" under the "S" key)), all of which are displayed at subsequent candidate input characters. Each predicted word 1090, affix 1092, or plural 1094 is located on respective subsequent candidate input characters that match the first letter of the predicted word 1090, affix 1092, or plural 1094. Now the user has the added option of inputting a predicted set of characters 1090, 1092, and 1094. Input is made in the same manner as described above. In some examples, when touchscreen 118 receives either affix 1092 or plural 1094 as an input, the <SPACE> character between cursor 1040 and "cook" is deleted and the corresponding inputted affix or plural is added to the end of "cook."

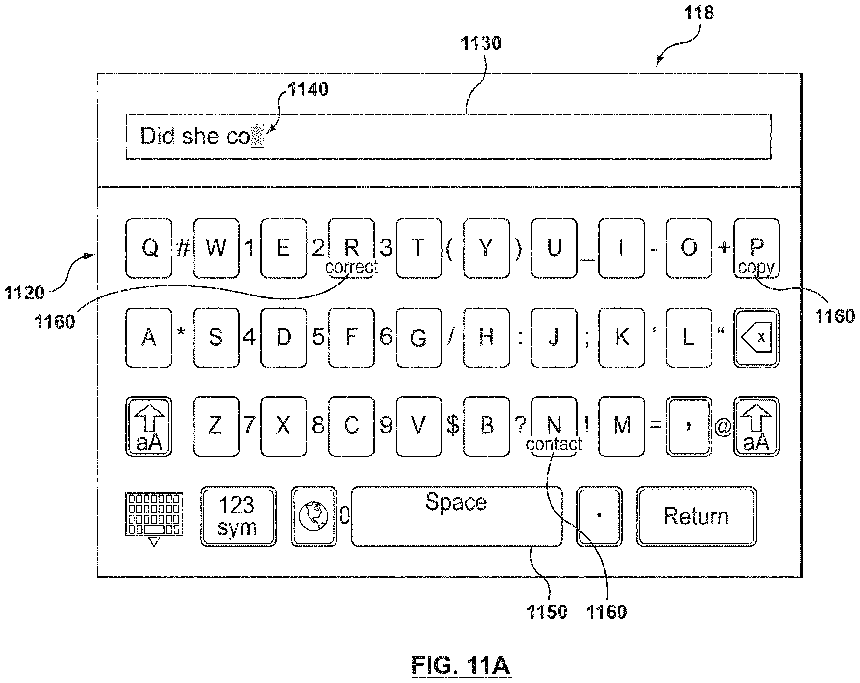

Fig. 11A shows an example where touchscreen 118 displays "Did she co" in a text bar 1130 and several generated set of characters 1160 are displayed at subsequent candidate input characters. In this example, touchscreen 118 displays generated set of characters "correct" 1160 under the "R" key, generated set of characters "copy" 1160 under the "P" key, and generated set of characters "contact" 1160 under the "N" key. While "co" is provided in the text bars of both Fig. 10A and Fig. 11A, touchscreen displays different generated set of characters based on the context of the characters in their respective text bars 1030 and 1130.

For example, in Fig. 10A, the characters °°co" follows "The," which implies that a noun beginning with "co" should follow. In Fig. 11A, the characters "co" follow a pronoun, which implies that a verb beginning with "co" should follow. As stated above, contextual data can be used to determine when certain set of characters are more appropriate based on, for example, the set of characters in a text bar or previous actions by a user.

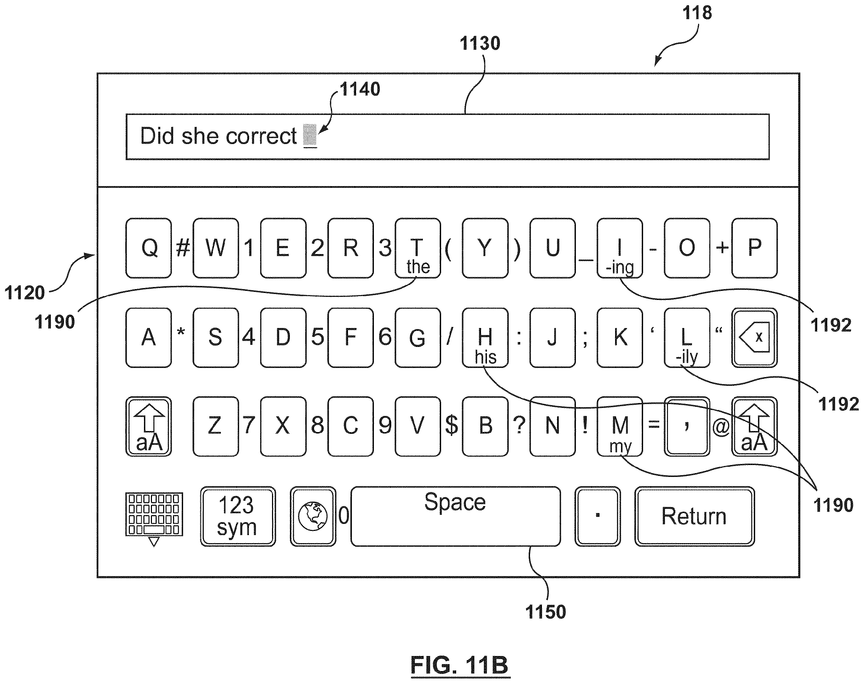

Fig. 11B shows an example where touchscreen 118 receives the set of characters "correct" as input after the user has selected the generated set of characters "correct" 1160. In this example, the set of characters "correct" is inserted in input field 1130 and a <SPACE> character is also inserted. Predicted set of characters (such as words 1190 and affixes 1192) are now displayed at subsequent candidate input characters. In this example, while affixes "-ing" and "-ily" both correspond to the "I" key, touchscreen 118 displays "-ing" with the "I" key and "-ily" with the "L" key. As stated above, the predicted affix may be assigned to a certain key based on a ranking, on contextual data, or a combination of both. In this example, the "-ing" affix may have had a higher ranking than the "-ily" affix and was thus assigned to the "I" key. Accordingly, the "-ily" affix was assigned to the "L" key based on the corresponding "L" character being in the "-ily" affix.

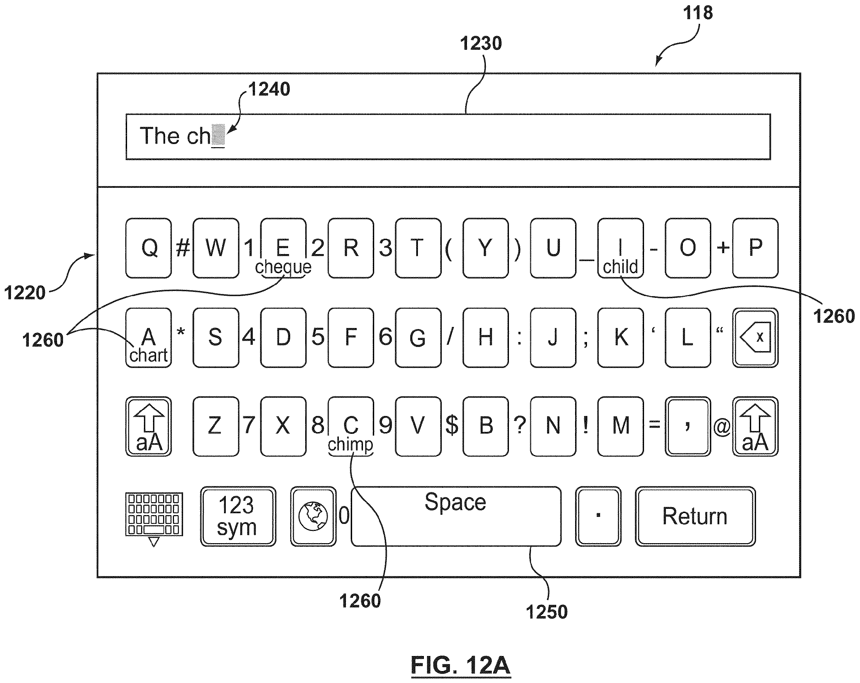

Fig. 12A shows an example where touchscreen 118 displays "The ch" in a text bar 1230 and several generated set of characters 1260 are displayed at subsequent candidate input characters. In this example, generated set of characters 1260 include both "child" and "chimp." In this example, while the third letter in both "child" and "chimp" are the same, touchscreen displays "child" under the "I" key and displays "chimp" under the "C" key. The determination on which generated set of characters goes under which candidate input key can be based on a ranking (as specified above). As illustrated in this example, touchscreen 118 can display a generated set of characters (in this case, "chimp") on a key even though that key may not be associated with any subsequent characters of the characters in text bar 1230.

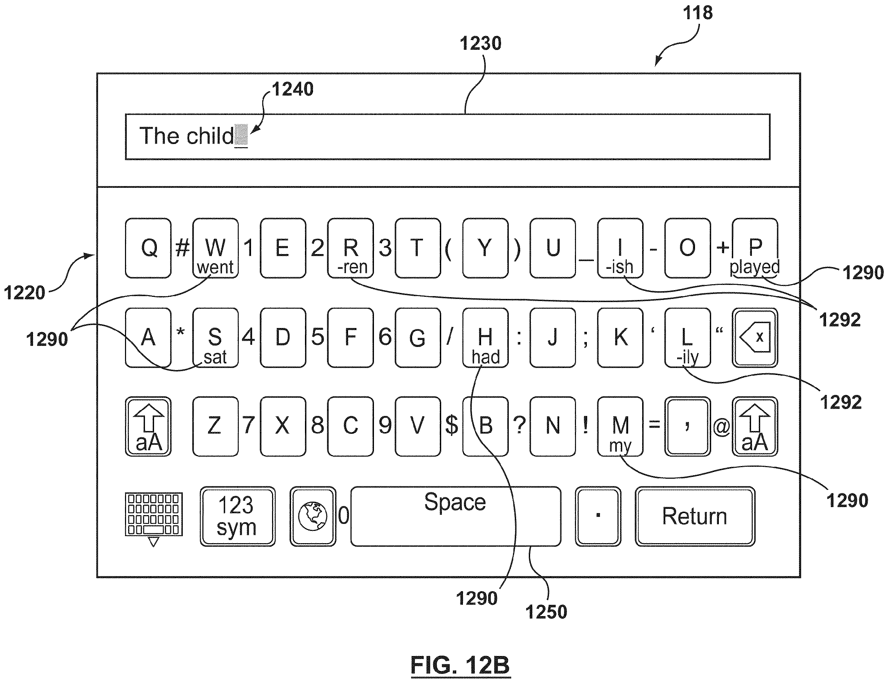

Fig. 12B shows an example where touchscreen 118 receives the set of characters "child" as input after the user has selected the generated set of characters "child" 1260. The set of characters "child" is inserted in input field 1230 and, in this example, a <SPACE> character is not inserted. Predicted set of characters (such as words 1290 and affixes 1292) are now displayed at subsequent candidate input characters. In this example, while affixes "-ish" and "-ily" both correspond to the "I" key, touchscreen 118 displays "-ish" with the "I" key and "-ily" with the "L" key. As stated above, the predicted affix may be assigned to a certain key based on a ranking, on conventional data, or a combination of both. In this example, the "-ish" affix may have had a higher ranking than the "-ily" affix and was thus assigned to the "I" key. Accordingly, the "-ily" affix was assigned to the "L" key based on the corresponding "L" character being in the "-ily" affix.

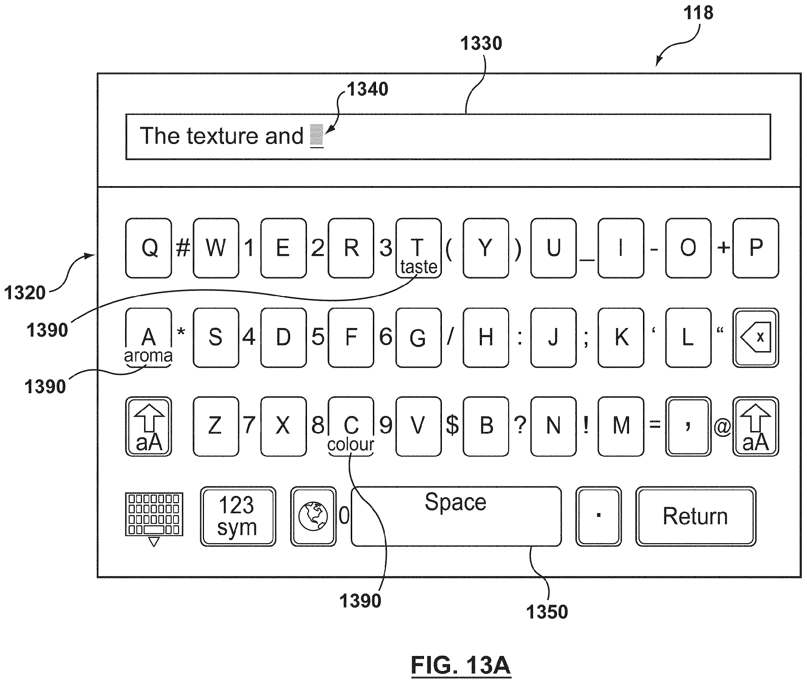

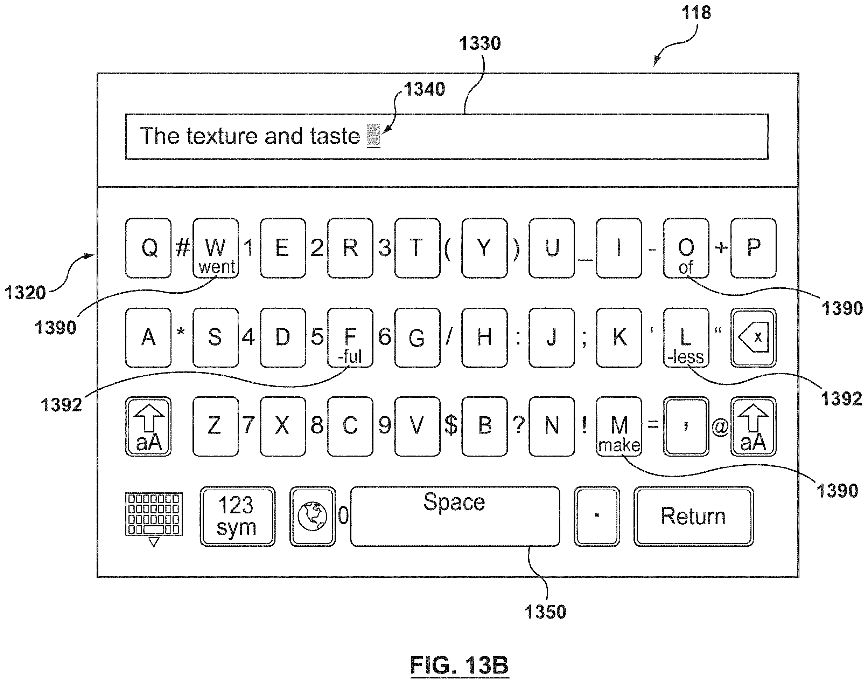

Fig. 13A shows an example where touchscreen 118 displays "The texture and" in a text bar 1330 and several predicted set of characters (for example, words 1390) are displayed at subsequent candidate input characters. Fig. 13B shows an example where touchscreen 118 received the set of characters "taste" as input after the user had selected the predicted set of characters "taste." In this example, a <SPACE> character was inserted after "taste." Consequently, predicted set of characters (such as, words 1390 and affixes 1392) are displayed at subsequent candidate input characters.

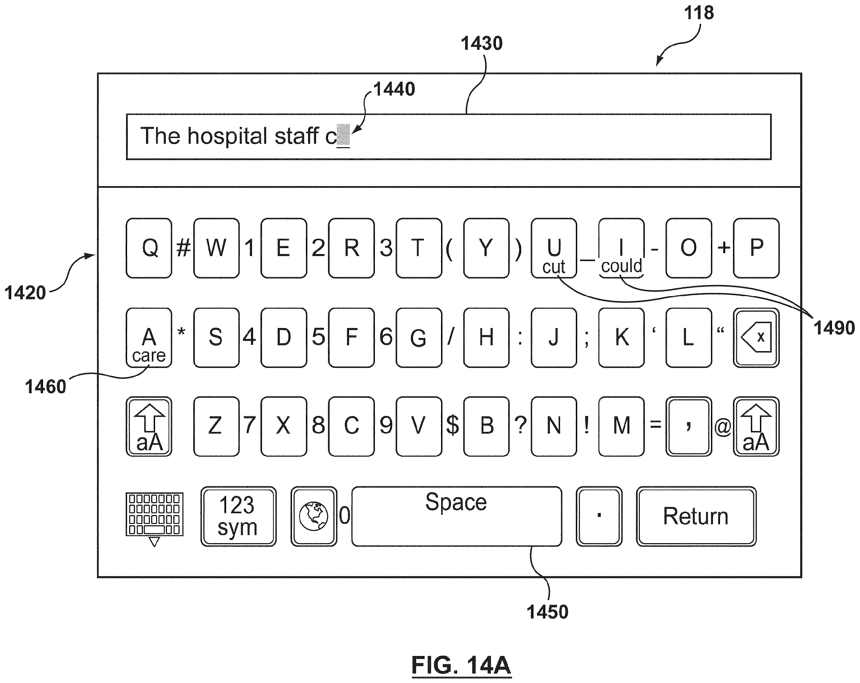

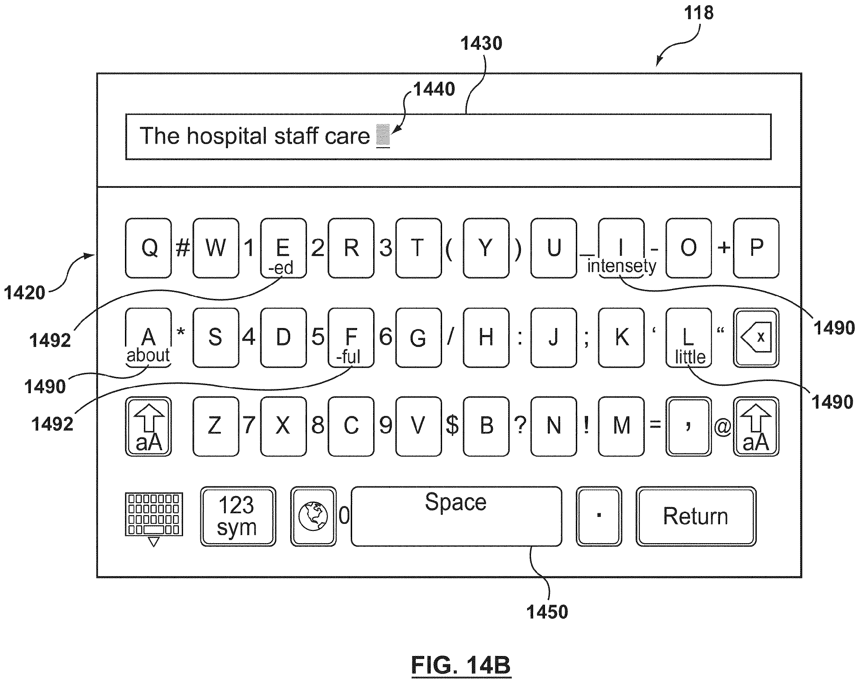

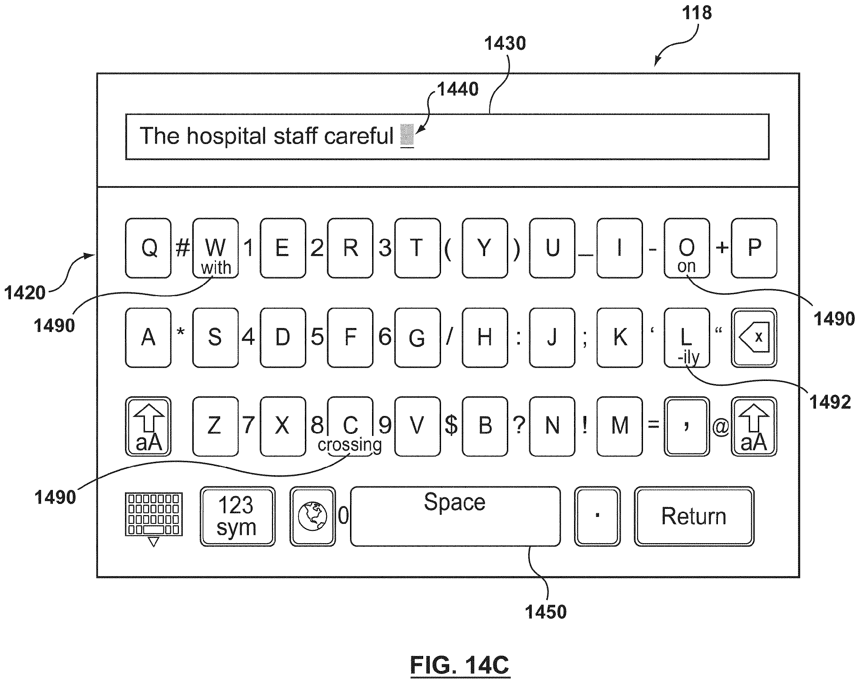

Fig. 14A shows an example where touchscreen 118 displays "The hospital staff c" in a text bar 1430 and several generated set of characters 1460 are displayed at subsequent candidate input characters. Fig. 14B shows an example where touchscreen 118 received the set of characters "care" as input after the user had chosen the generated set of characters "care." Generated set of characters "care" is now placed in input field 1430 along with a <SPACE> and predicted set of characters (such as, words 1490 and affixes 1492) are displayed at subsequent candidate input characters. Fig. 14C shows an example where touchscreen 118 received the affix "-ful" as input (thereby modifying the set of characters "care" to "careful") after the user had chosen the predicted affix "-ful." Thus, the set of characters "careful" is now inserted into input field 1430. Note, in some examples, inputting a word or affix can modify the input word or word fragment. For example, if "spicy" was input by a user, and "ness" is a predicted affix and is inputted, "spicy" would change to "spiciness," dropping the "y" and adding "iness". In other examples, "happy" could change to "happiness" or "conceive" could change to "conceivable".

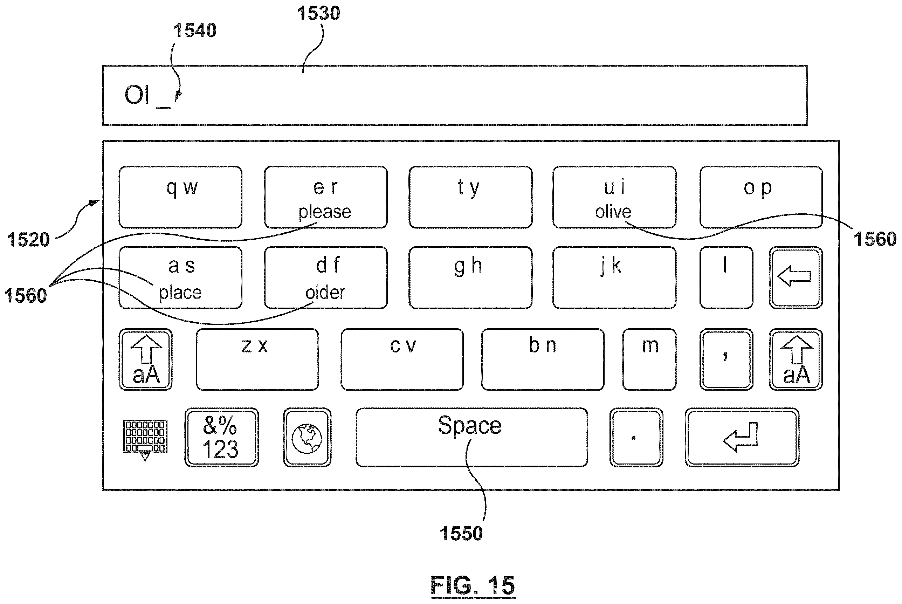

Fig. 15 shows an example of an ambiguous keyboard 1520, which can have multiple characters assigned to a key (for example, such as a telephone keypad where "A", "B" and "C" are assigned to key 2; "D", "E" and "F" are assigned to key 3, and so on). For example, the characters "Q" and "W" can be assigned one key, and the characters "E" and "R" assigned to another key. In this example, the user has input the characters "OI" by pressing the "op" key followed by the "L" key. Using a predictor, generated set of characters 1560 are displayed at subsequent candidate input characters. Since the first pressed key can input either an "O" or a "P" and the second pressed key inputs an "L", generated set of characters 1560 will begin with "OL" or "PL", such as shown by generated set of characters 1560 in Fig. 15.

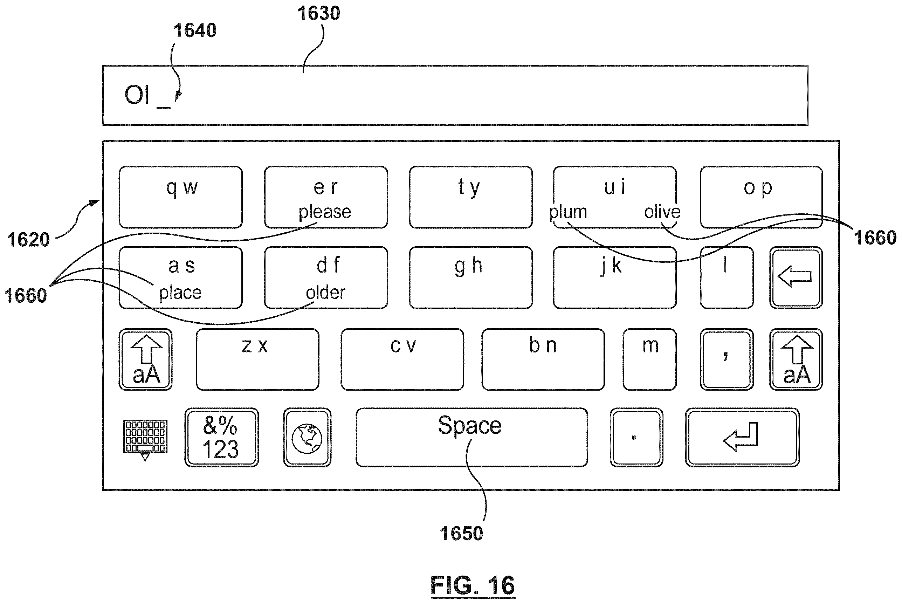

Fig. 16 shows another example of an ambiguous keyboard 1620. In this example, generated sets of characters "plum" and "olive" 1660 are displayed near the "ui" key. The sets of characters could also have been displayed at or on the "ui" key. Here, both sets of characters correspond to a particular input corresponding to a key, namely the third letter of plum is a "u" and the third letter of olive is an "i." Touchscreen 118 (via main processor 102) can differentiate between the input of either set of characters based on the user's action. For example, the user can swipe at or near the right of the "ui" key to input "olive", or swipe at or near the left of the "ui" key to input "plum".

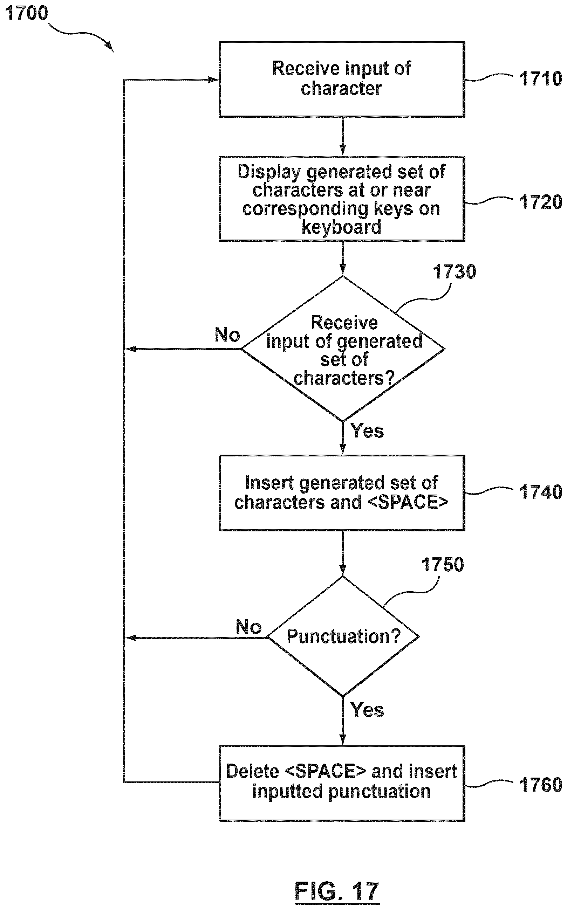

The examples illustrated in Figs. 17, 18, and 19 can be implemented with any set of characters such as words, phrases, acronyms, names, slang, colloquialisms, abbreviations, or any combination thereof

Fig. 17 shows in flowchart form a method 1700 in accordance with some examples. Method 1700 can be implemented with a processor, such as

main processor 102, and stored on a tangible computer readable medium, such as hard drives, CDs, DVDs, flash memory, and the like. At block 1710, the processor receives an input of a character. At block 1720, the processor displays a generated set of characters at or near keys of subsequent candidate input characters on the touchscreen, such as described above.

At block 1730, the processor receives an input of the generated set of characters chosen by a user. If the user does not choose a generated set of characters displayed at or near keys of subsequent candidate input characters, the method restarts at block 1710, where the touchscreen can receive an input of another character. If a generated set of characters is received as input, at block 1740 the generated set of characters and a <SPACE> character is inserted in an input field (for example, input field 330 of Figs. 3-9). As mentioned previously, the user can choose the generated set of characters, for example, by swiping at or near it or by long pressing a key corresponding to the subsequent candidate input character.

Continuing at block 1750, if the processor detects that punctuation is not to be inserted, the method restarts at block 1710. If punctuation is to be inserted, the method continues to block 1760 where the <SPACE> character is deleted and the appropriate punctuation is added to the input field. After block 1760, the method starts over at block 1710.

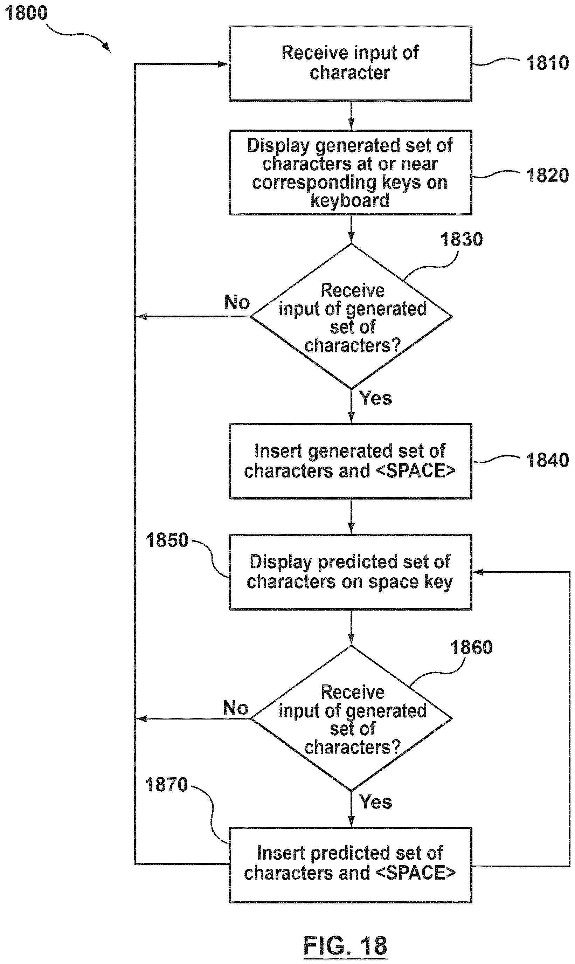

Fig. 18 is a flowchart illustrating example method 1800 in accordance with some examples. Method 1800 can be implemented with a processor, such as main processor 102, and stored on a tangible computer readable medium, such as hard drives, CDs, DVDs, flash memory, and the like. At block 1810, the processor receives an input of a character.

At block 1820, the processor displays a generated set of characters at or near a location on the keyboard corresponding to a subsequent candidate input character on a touchscreen. At block 1830, the processor receives an input of a generated set of characters chosen by a user. If the user does not choose a generated set of characters displayed at or near keys of subsequent candidate input characters, the method restarts at block 1810, where the processor can receive an input of another character. If a generated set of characters is received as input, at block 1840 the generated set of characters and a <SPACE> character is inserted in an input field (for example, input field 330 of Figs. 3-9). As mentioned previously, the user can choose the generated set of characters, for example, by swiping.at or near it or by pressing a key corresponding to the subsequent candidate input character for a predetermined period of time.

At block 1850, a predicted set of characters, different from the generated set(s) of characters, is displayed on a space key of the keyboard after the input of the generated set of characters in block 1830. The predicted set of characters displayed in block 1850 is determined by using a predictor. In some examples, the one or more predicted sets of characters can be placed on one or more keys other than the space key.

At block 1860, the processor can determine whether it has received an input of the predicted set of characters based on a user input. If the touchscreen has not received an input of the predicted set of characters because the user has not chosen the predicted set of characters, the method restarts at block 1810. If the processor has received the input of the predicted set of characters, the method continues to block 1870, where the chosen predicted set of characters and a <SPACE> character is inserted in the input field. From here, method 1800 can return to either block 1810 or block 1850.

Even though method 1800 does not display the punctuation illustration as shown in method 1700, the punctuation illustration, as shown in blocks 1750 and 1760, can likewise be applied to method 1800.

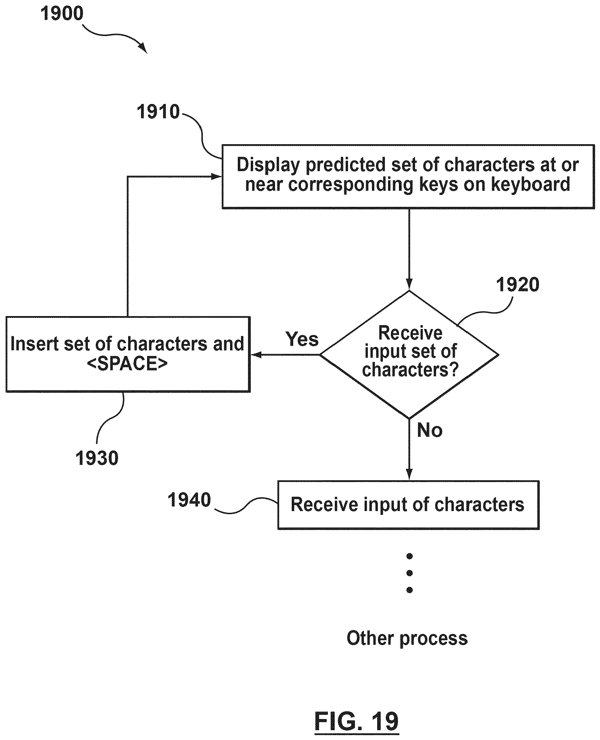

Fig. 19 is a flowchart illustrating an example method 1900 in accordance with some examples. At box 1910, predicted set of characters is displayed at corresponding subsequent candidate input characters. In these examples, an input has not been received or a delimiter has been activated, such as inputting a <SPACE>. Here, one or more predicted set of characters (such as, words, affixes, or a combination thereof) are placed on subsequent candidate input characters that correspond to the first letter of the generated set of characters. Moving to box 1920, it is determined whether the touchscreen receives an input of the set of characters (such as, word or affix) based on a user's selection. If an input is received, the method moves to block 1930 where the predicted set of characters and a <SPACE> character are inserted into an input field. Then the method starts over at block 1910. If the touchscreen does not receive an input of the set of characters, the touchscreen is available to receive an input of a character (as described by block 1710 of Fig. 17 or block 1810 of Fig. 18) and proceed through methods (such as methods 1700 of Fig. 17 or 1800 of Fig. 18 or even method 1900 of Fig. 19).

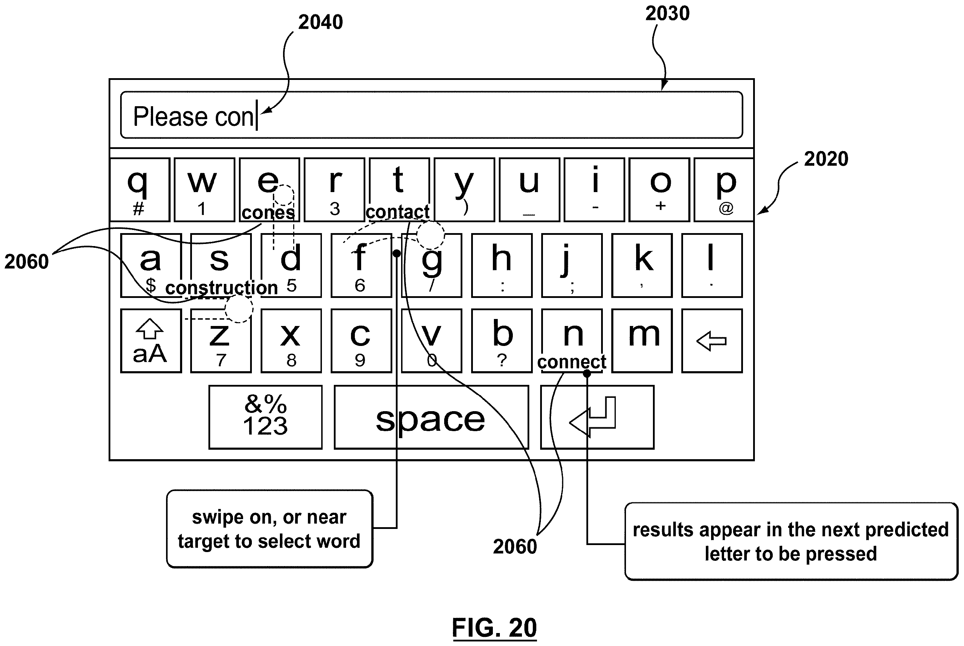

Fig. 20 shows another example of a virtual keyboard 2020 having an input field 2030. The set of characters "Please con" are received as input by the touchscreen and displayed in the input field 2030 followed by a cursor 2040, which can be a vertical line (as shown) or any other shape, such as an underscore as mentioned previously. A predictor determines one or more generated set of characters 2060 based in part on the received input for the current position of cursor 2040 within the current word, which is in the fourth character position of the current word, as shown in input field 2030. The current word is the word in which the cursor is currently located. In the shown example, generated set of characters 2060 "cones", "contract", "constriction" and "connect" are displayed. Each generated set of characters 2060 is displayed at a key corresponding to a subsequent candidate input character (for example, under the E, T, S and N keys of the virtual keyboard 2020, respectively), for the current position of cursor 2040, which is in the third character position, as shown in input field 2030.

In the shown example, each generated set of characters 2060 is displayed at or near keys on the virtual keyboard 2020 associated with the subsequent candidate input characters. The display of a generated set of characters 2060 at or near a key corresponding to a subsequent candidate input character depends, for instance, on the size of the generated set of characters 2060 and the size of generated set of characters associated with nearby keys of other subsequent candidate input characters. When the generated set of characters associated with nearby keys in the same row of keys in the virtual keyboard 2020 are too large to be displayed at the same time without overlapping with each other or without a predetermined distance between the generated sets of characters, the processor 102 limits the generated set of characters which are displayed. The processor 102 may limit the generated set of characters which are displayed using one or any combination of the rank of each generated set of characters, the size of each generated set of characters, and a distance between each generated set of characters which are displayed so that a predetermined distance between the generated set of characters is maintained. This may result in the display of one or more generated sets of characters which are larger than the associated key in the virtual keyboard 2020.

In some examples, if two generated sets of characters are both ranked high, and these sets of characters would otherwise be displayed at nearby keys but cannot be displayed and still maintain a predetermined distance between the generated sets of characters at the display text size, the electronic device could be configured to display only the highest ranked generated set of characters. This results in the display of the most likely generated set of characters. In other examples, only the longest of the generated set of characters is displayed. This may be beneficial in that allowing faster entry of longer words saves time and processing cycles, thereby leveraging the predictive text input solution. In yet other examples, only the shortest generated set of characters is displayed. This may be beneficial in that shorter words can be more common, at least for some users, thereby allowing faster entry of words which saves time and processing cycles, thereby leveraging the predictive text input solution.

In some examples, the processor 102 may only limit the generated set of characters which are displayed in neighboring/adjacent keys in the same row of keys in the virtual keyboard 2020. In some examples, the processor 102 may limit the generated set of characters which are displayed in neighboring/adjacent keys in the same row of keys in the virtual keyboard 2020 so that a generated set of characters is never displayed in neighboring/adjacent keys irrespective of the size of the generated set of characters or distance between each generated set of characters. In such examples, the processor 102 uses the rank to determine which generated set of characters are displayed.

In other examples, the processor 102 can limit the generated set of characters which are displayed when the generated set of characters associated with nearby keys in different rows of keys in the virtual keyboard 2020 are too large to be displayed at the same time without overlapping with each other or without a predetermined distance between the generated sets of characters. In other examples, the processor 102 can limit the generated set of characters which are displayed when the generated set of characters associated with nearby keys in the same or different columns of keys in the virtual keyboard 2020 are too large to be displayed at the same time without overlapping with each other or without a predetermined distance between the generated sets of characters

As mentioned previously, a user can use a finger or stylus to swipe a generated set of characters to input that generated set of characters. An individual letter, in contrast, can be input by tapping a respective key in the virtual keyboard 2020 using a finger or stylus. The touchscreen differentiates between tap and swipe events using movement and duration of touch events, the details of which are known in the art and need not be described herein. Each key in the virtual keyboard 2020 and each generated set of characters 2060 which is displayed has an associated target area on the touchscreen. The target area associated with each generated set of characters can be larger than and/or overlap with the target area of the key corresponding to the subsequent candidate input character with which it is associated and possibly nearby keys, such as neighboring keys in the same row. A user need only swipe on or nearby a displayed generated set of characters to input the generated set of characters. This permits faster input of a generated set of characters by creating larger and more accessible target areas, thereby saving time and processing cycles. In some examples, a generated set of characters can be input by detecting a swipe in any direction at or near the displayed generated set of characters. In other examples, a generated set of characters can only be input by detecting a swipe in a particular direction at or near the displayed generated set of characters. The particular direction may be associated with a direction in which the particular direction displayed generated set of characters (e.g., left or right in the shown example). In some examples, the swipe is at or near the displayed generated set of characters when the swipe has an initial contact point within the target area associated with the displayed generated set of characters (which may be the same or larger than the displayed generated set of characters).

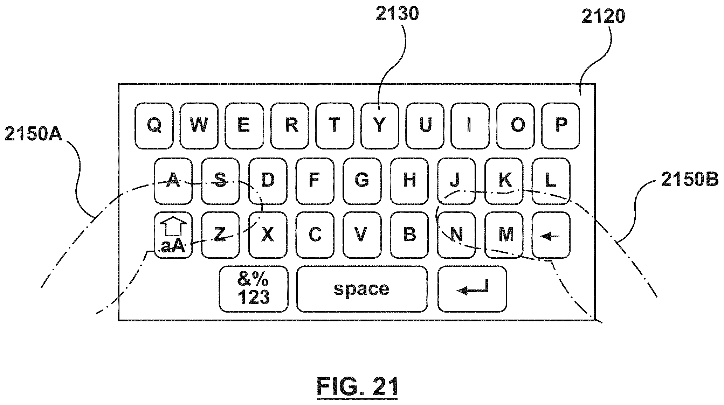

When inputting characters, users may hold the device in both hands using only their thumbs to activate the keys on the virtual keyboard. Two-thumb typing is common in landscape screen orientations but may also be used in portrait screen orientations (typically only when the size of the touchscreen 118 is sufficiently large). Referring to Fig. 21, an example virtual keyboard 2120 having a number of keys 2130 is shown along with a user's thumbs 2150A and 2150B, respectively.

As illustrated in Fig. 21, a user's thumbs 2150A and 2150B may obscure large portions of the virtual keyboard 2120 from the user's eyes. In some instances, this may make it difficult for the user to discern whether he/she has activated the desired key. In some electronic devices, the activated key will flash or a visual cue such as a tooltip may be displayed above the activated key to inform the user of which key has been activated. As appreciated by persons skilled in the art, a tooltip is a user interface element provided by the GUI which provides a hint associated with another user interface element. The hint provides a visual cue directing the user's attention to the other user interface element. Tooltips used in conventional virtual keyboards are displayed above the activated key in the virtual keyboard. The tooltip typically hovers above the activated key for a short duration, typically while the contact with the activated key on the touchscreen 118 is maintained (e.g., the tooltip disappears/is removed when the user lifts his/her finger. In one example as seen in Fig. 21, if the user is activating the "N" key with the right thumb 2150B, the user's thumb may obscure the flash of the "N" key or the display of a tooltip above the "N" key. Accordingly, conventional tooltips are limited in the extent to which the notification function of the tooltips is effective.

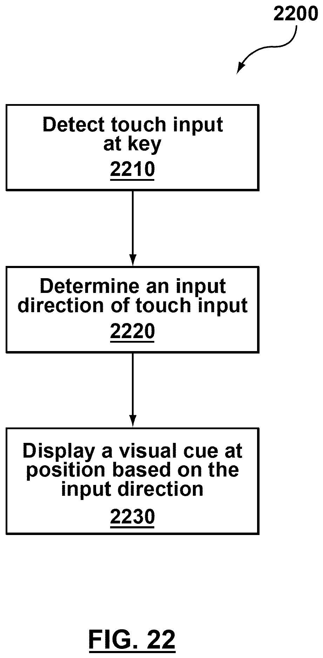

Fig. 22 shows in flowchart form a method 2200 in accordance with some examples. The example method 2200 and any methods described herein can be implemented with a processor, such as main processor 102, and stored on a tangible computer readable medium, such as hard drives, CDs, DVDs; flash memory, and the like.

At block 2210, the device detects a touch input at a key 2130 of the virtual keyboard 2120. In some examples, the touch input may be a tap or a prolonged touch on or around a key 2130 of the virtual keyboard 2120. In some examples, the touch input may be one of the contact points of a multi-touch input.

At block 2220, the device determines an input direction of the touch input. The input direction of the touch input is a direction from which the device determines a user has provided the touch input. For example, when a user is holding a device in the manner illustrated in Fig. 21, the user's left thumb 2150A will likely approach and provide a touch input from the left side of the virtual keyboard 2120. Accordingly, the determined input direction in such cases is left. Conversely, the user's right thumb 2150B will likely approach and provide a touch input from the right side of the virtual keyboard. Accordingly, the determined input direction in such cases is right.

As described above, in at least some examples, the input direction may be left or right of the virtual keyboard. In some examples, the input direction may be top or bottom of the virtual keyboard. Other input directions are also possible, such as a diagonal direction, which may be at any angle.

The input direction may be determined in accordance with the direction of a touch input, such as the direction in which a contact point moves after initially contacting the touchscreen 118, the shape of the contact area of the touch input, the proximity of the touch input to a respective edge of the touchscreen 118, or other suitable means, examples of which are provided below. The proximity of the touch input may be determined relative to a screen orientation of the GUI (e.g., input is closest to left, right, top or bottom of the virtual keyboard 2120). Alternatively, the proximity of the touch input may be determined relative to the touchscreen 118 (e.g., input is closest to left, right, top or bottom of the touchscreen 118).

At block 2230, a visual cue of the key at which the touch input was detected is displayed on the display. This visual cue is displayed at a position on the display based on the input direction of the touch input. In some examples, the visual cue is displayed proximate to the touched key and offset in a direction away from the input direction of the touch input.

In some examples, the input direction provides a proxy for determining which of the user's hands is being used, i.e. to which hand the finger causing the touch input belongs, so that the visual cue may be located accordingly. When the touch input is associated with the user's left hand, the visual cue is located to the right of the activated key (typically above and to the right of the activated key). When the touch input is associated with the user's right hand, the visual cue is located to the left of the activated key (typically above and to the left of the activated key).

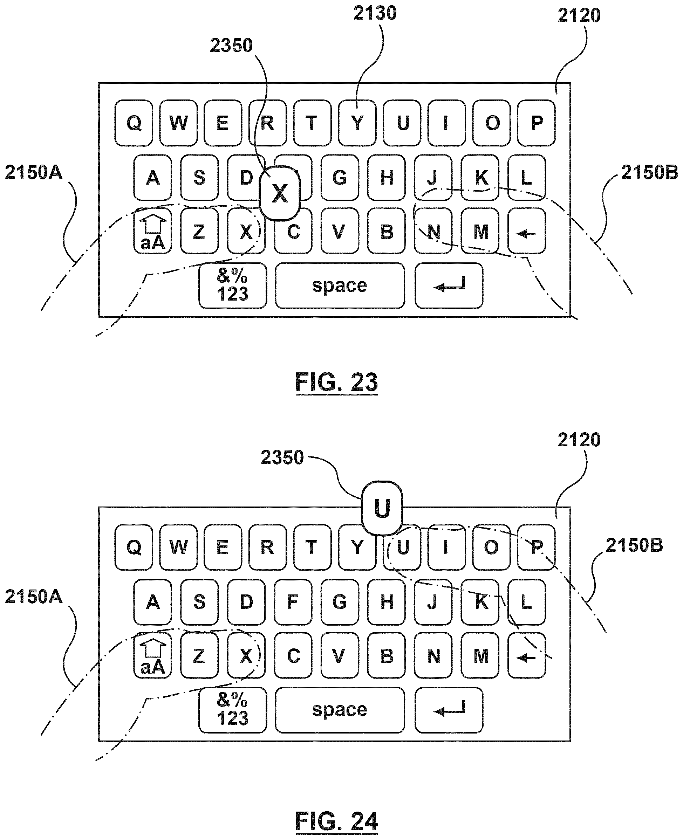

Fig. 23 shows an example of a virtual keyboard 2120 on which a user provides a touch input on the "X" key with the user's left thumb 2150A. The device determines that the input direction of the touch input is from the left side of the device. The device displays a visual cue in the form of a character icon 2350 showing that the "X" key has been touched. Based on the left input direction of the touch input, the device displays the "X" character icon 2350 proximate but offset to the right of the "X" key. In other words, in this example, the visual cue is offset in a direction away from the input direction. In some instances, by displaying the visual cue in this manner based on the input direction of the touch input, the chance of the visual cue being obscured by an input implement may be reduced, and in some instances, the visibility of the touch input feedback to the user may be improved.

Generally, a user's eyes are above the user's hands relative to the device. Therefore, in some examples including the example in Fig. 23, the visual cue is offset above and in a direction away from the input direction. In Fig. 23, the visual cue in the form of character icon 2350 is offset above and to the right of the touched "X" key. In some examples, additionally offsetting the visual cue in a direction above the touch input will reduce the chance of the visual cue being obscured, and in some examples may increase the visibility of the visual cue to the user. In some examples, discussed in more detail below, the visual cue (e.g., tooltip) may be selectable. For example, tapping the visual cue may cause an action associated with the visual cue, such as a character input, to be performed. In such examples, it is easier for a finger in the opposite hand to select the visual cue (e.g., tooltip) if the visual appears in the direction of the opposite hand. For example, in Fig. 23, if the character icon 2350 for the 'X' key was an actionable item, the directional bias would make it easier for the right hand thumb to tap the character icon 2350 to input the character "x" or perform a command associated with the "X" key.

Fig. 24 shows another example of a virtual keyboard 2120 on which a user is providing a touch input on the "U" key with the user's right thumb 2150B. In this example, the device detects the touch input and determines that the input direction of the touch input is from the right. Based on this input direction, the device displays a visual cue in the form of a "U" character icon 2350 which is offset above and to the left of the touched "U" key.

In some examples, the visual cue is displayed for a short duration before disappearing again. In some examples, the visual cue is displayed for as long as the touch input is maintained at the key. For example, if a user presses and holds a key, the visual cue may remain displayed on the display until the user releases the key.

As mentioned above, in some examples, the input direction may be determined in accordance with the shape of the contact area of the touch input. As part of the determining the input direction in such examples, the device determines a shape of the contact area of the touch input. Each touch input is caused by a touch event detected by the touchscreen 118. The touch event is defined by a contact area caused by interaction of a user's finger or stylus with the touchscreen 118. The touchscreen 118, or the main processor 102, may determine a shape or profile of the contact area of the user's finger.

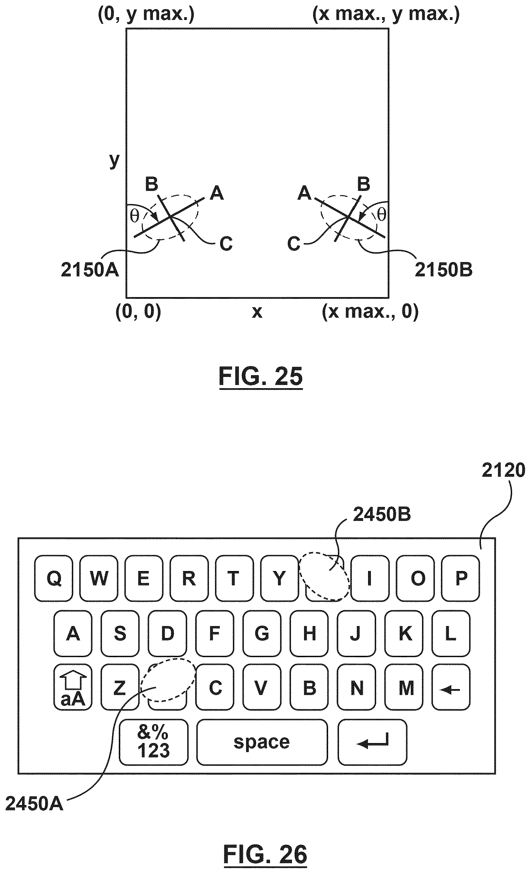

Referring now to Fig. 25, a Cartesian (two dimensional) coordinate system suitable for mapping locations of the touchscreen 118 and determining a shape of the contact area of the user's finger will be described. The touchscreen 118 defines a Cartesian coordinate system defined by x and $\gamma$-axes in an input plane of the touchscreen 118. The x and $\gamma$-axes of the Cartesian coordinate system are used to map locations of the touchscreen 118 and are aligned with the x and $\gamma$-axes of the positional sensor; however in other examples these may be different. Each touch event on the touchscreen 118 returns a touch point defined in terms of an (x, y) value. The returned touch point is typically the centroid of the contact area. In the shown example , the coordinate system has an origin (0, 0) which is located at a bottom-left corner of the touchscreen 118; however, it will be appreciated that the origin (0, 0) could be located elsewhere such as a top-left corner of the touchscreen 118.

The contact area caused by a user's finger roughly represents an ellipse. In at least some examples, the touchscreen 118, or the main processor 102, may determine an input direction based on the shape of the contact area of the user's finger by performing a mathematical analysis on the contact area. As part of calculating performed in the mathematical analysis, a center point (or centroid) of the contact area and two lines which symmetrically bisect the ellipse through the center point are determined. The longer of the bisectors represents a major axis (A) of the ellipse and the shorter of the bisectors represents a minor axis (B) of the ellipse. The angle ($\theta$) of the major axis (A) relative to an edge of the display 112 or a screen orientation may be used to determine the direction of the touch input. The screen orientation of the content displayed on the display 112, which is a parameter of the GUI and known to the device, or a device orientation of the display 112 which is detected by the orientation sensor 197, may be used to determine the direction along the major axis (A). More details of an example method of calculating a shape of the contact area of the user's finger is found in U.S. Patent Publication No. 2007/0097096.

The centroid of the contact area is calculated based on raw location and magnitude data (e.g., capacitance data) obtained from the contact area. The centroid is typically defined in Cartesian coordinates by a value ($X_c$, $Y_c$). The centroid of the contact area is the weighted averaged of the pixels in the contact area and represents the central coordinate of the contact area. By way of example, the centroid may be found using the following equations:

$$X_c = \frac{\sum_{i=1}^{n} Z_i * x_i}{\sum^{n} Z_i} \qquad (1)$$

$$Y_c = \frac{\sum_{i=1}^{n} Z_i * y_i}{\sum^{n} Z_i} \qquad (2)$$

where $X_c$ represents the x-coordinate of the centroid of the contact area, $Y_c$ represents the $\gamma$-coordinate of the centroid of the contact area, x represents the x-coordinate of each pixel in the contact area, y represents the $\gamma$-coordinate of each pixel in the contact area, Z represents the magnitude (e.g., capacitance value) at each pixel in the contact area, the index i represents the pixel (or electrode) in the contact area and n represents the number of pixels (or electrodes) in the contact area. Other methods of calculating the centroid will be understood to persons skilled in the art.

In other examples, the touchscreen 118, or the main processor 102, may determine an input direction based on the shape of the contact area of the user's finger by performing a comparative analysis on the contact area. As part of the comparative analysis, the detected contact area is compared to one or more touch profiles stored, for example, in the memory 110 on the device. In some examples, the touch profiles may include common shapes of touch inputs by a left 34 thumb press or right thumb press. In some examples, profiles may also include common shapes for left or right finger touches. In some examples, these profiles may include common shapes of stylus touches when held by a left hand or when held by a right hand.

In some examples, the device determines the input direction of a touch input by determining whether the shape of the touch input corresponds to one of the touch profiles stored in memory. For example, if the device determines that a touch input shape corresponds to a touch profile for a left thumb press, the device may determine that the input direction of the touch input is from the left.

The shape of the touch input does not necessarily have to identically match a touch profile. In some examples, the device may determine the corresponding touch profile by selecting the touch profile which most closely resembles the shape of the touch input.

Fig. 26 illustrates non-limiting example touch shapes of a left thumb touch 2450A and a right thumb touch 2450B. The touch shapes have been shown as ellipses for illustrative purposes; however, the shape of actual contact areas may vary. In other examples, the device may determine the input direction of the touch input based on which portion of the device the touch input was received. In some examples, if the touch input is detected on a left portion of the virtual keyboard, the device determines that the input direction of the touch input is from the left. Similarly, in some examples, if the touch input is detected on a right portion of the virtual keyboard, the device determines that the input direction of the touch input is from the right.

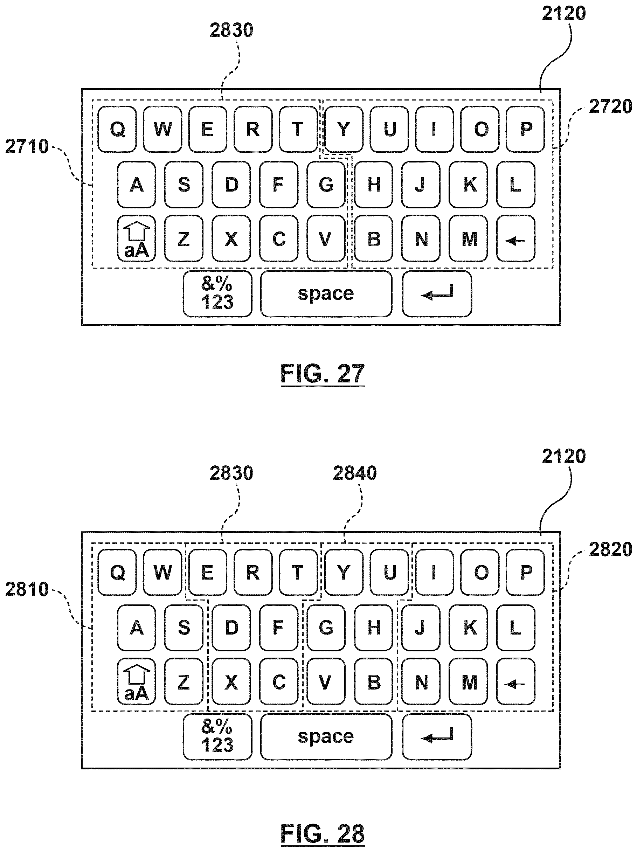

Fig. 27 shows an example virtual keyboard 2120 having a number of keys in a left portion 2710 and a number of keys in a right portion 2720. A different number of divisions of the keyboard may be used in other examples. In some examples, the keys may be assigned into upper and lower portions instead of, or in addition to, the left portion 2710 and the right portion 2720.

Fig. 28 shows an example virtual keyboard 2120 having keys in a left portion 2810, a right portion 2820, a mid-left portion 2830, and a mid-right portion 2840. In some examples, a touch input at a key in the left portion 2810 may cause the electronic device 100 to display a visual cue above and to the right of the touched key at an offset n degrees (e.g., 45 degrees) from the vertical, while a touch input at a key in the mid-left portion 2830 may cause the electronic device 100 to display a visual cue above and to the right of the touched key at an offset m degrees (e.g., 30 degrees) from the vertical, where n and m are different. Similarly, a touch input at a key in the right portion 2820 may cause the electronic device 100 to display a visual cue above and to the left of the touched key at an offset n degrees (e.g., 45 degrees) from the vertical, while a touch input at a key in the mid-right portion 2840 may cause the electronic device 100 to display a visual cue above and to the left of the touched key at an offset m degrees (e.g., 30 degrees) from the vertical, where n and m are different. Accordingly, the offset distance and/or position between the touched key and the visual cue may vary based on which portion the activated key is located in. This solution allows the offset distance and/or position to more precisely adjust to the position of the user's finger.

In some examples, when a touch input is detected in a middle portion of the virtual keyboard such as mid-left 2830 and mid-right 2840 portions illustrated in Fig. 28, the electronic device 100 may display a visual cue offset such that it is directly above the touched key.

In some examples, when a touch input is detected in a middle portion of the virtual keyboard (such as mid-left 2830 and mid-right 2840 portions illustrated in Fig. 28, such as mid-left 2830 and mid-right 2840 portions illustrated in Fig. 28), the electronic device 100 may display a visual cue offset in a direction away from the next most probable letter based on letter or word predictions, as mentioned previously.

In some examples, the electronic device 100 may determine the input direction of the touch input, at least in part, by detecting proximity information on the one or more proximity sensor 198 or detecting ambient light information on the one or more ambient light sensors 199. The electronic device 100 detects proximity of an object at or near the display 112 at a time when the touch input was detected (using proximity information and/or ambient light information), and determines the input direction as left or right in accordance with a side of the display at which proximity of an object was detected. In some examples, a first proximity sensor 198 on a left side of the electronic device 100 and a second proximity sensor 198 on the right side of the electronic device 100 may detect the proximity of a user's hand approaching from the left or right side of the electronic device 100. In some examples, a single proximity sensor 198 at a central position on the electronic device 100 may be configured to detect objects in close proximity to either the left or the right sides of the electronic device 100. In some examples, the one or more proximity sensors 198 may also detect the proximity of an object close to the top or bottom of the electronic device 100. In any of these examples, the proximity of an object to a particular side of the electronic device 100 may correspond to a determination that a touch input is coming from that particular side of the electronic device 100.

Similar to the proximity sensor examples described above, the ambient light sensor 199 may detect proximity of an object at or near the display 112 in accordance with a lower intensity ambient light at a particular side of the electronic device 100. In some examples, the lower intensity ambient light may correspond to a shadow cast by an object approaching from that particular direction, and may therefore correspond to a determination that a touch input is coming from that direction.

In some examples, the electronic device 100 may determine the input direction of the touch input, at least in part, by detecting the orientation of the electronic device 100 using an orientation sensor 197 such as an accelerometer. In some examples, the electronic device 100 may determine that the electronic device 100 is lying on a flat surface such as a desk when the orientation sensor 197 detects that the electronic device 100 is horizontal with the face of the touchscreen 118 facing upwards. With this information, the electronic device 100 may determine that touch input corresponds to a finger other than the user's thumbs because it would be difficult for a user to use his/her thumbs when the device is lying on a flat surface. In such cases, any analysis of the shape of the contact area of the touch input may be restricted to fingers other than the thumbs, and may be restricted to index fingers, which are typically used for typing when using the electronic device 100. This allows, for example, shape analysis to be limited to a subset of data, such as fingers other than thumbs or merely index fingers.

In some examples, the orientation sensor 197 may detect that the electronic device 100 is partially upright with the top of the electronic device 100 facing upwards and slightly to the right. In this orientation, a user may be holding the device only in his/her right hand, and therefore, a user may likely be using his/her right hand to provide touch inputs. Accordingly, the device may use the detected orientation information to determine that a touch input is from the right side of the electronic device 100. Similarly, in some examples, the orientation sensor 197 may detect that electronic device 100 is in a position which may correspond to a user holding the electronic device 100 only in his/her left hand, and therefore, the electronic device 100 may use the detected orientation information to determine that a touch input is from the left side of the electronic device 100.

Other techniques may be used alone or in conjunction with other techniques to determine the finger input direction and/or where the visual cue (e.g., tooltip) should be located. For example, settings may be used. The electronic device 100 may allow users to specify which finger he or she uses for which key. This may be useful to adjust a mapping model which, for example, may have been learned by the electronic device 100 through other means. For example, the electronic device 100 may determine that a left-hand finger is being used when the character 'g' is typed and a right-biased visual cue (e.g. tooltip) appears whereas the user may want the tooltip direction to be biased to the left because the user uses the right-hand finger when the character 'g' is typed or for other reasons. A settings menu to modify the behaviour of the visual cues may be useful. Finger mapping may also be used. Finger mapping, i.e., which finger tapped which character key in a particular context, may be learned from an external camera-based system which analyses the virtual keyboard or other means.

While the foregoing description in connection with Fig. 21-28 has been focused on two-finger typing, the teachings of the present disclosure can also be applied to one-finger typing. One-finger typing (e.g., one-thumb typing) is typically performed when users hold the device in one hand and use only one finger (typically a thumb) to activate the keys on the virtual keyboard. One-thumb typing is common in portrait screen orientations but may also be used in landscape screen orientations (typically only when the size of the touchscreen 118 is sufficiently small).

The device may be able to detect one-finger typing, for example, by the shape of the touch inputs as described previously. The direction/angle of the major axis of the contact area of touch inputs can be used to identify the handedness of the user, or at least the hand with which the user is typing. The angle ( ) of the major axis (A) forms an acute angle relative to a vertical component (y-axis) of the GUI in a given screen orientation as shown in Fig. 25. The angle ( ) is positive relative to the vertical component when the user is typing with the left hand, whereas the angle ( ) is negative relative to the vertical component when the user is typing with the right hand. When a threshold amount of detected touch events are associated with one hand, one-finger typing is detected. The particular hand with which the touch events are associated is determined to be the typing hand. One-finger typing may be presumed when a portrait screen orientation is used. In such cases, only handedness needs to be determined. Alternatively, handedness may be a known parameter, for example, a parameter stored in the memory 110.

When left-handed typing is determined or detected, the visual cue is located to the right of the activated key (typically above and to the right of the activated key). When right-handed typing is determined or detected, the visual cue is located to the left of the activated key (typically above and to the left of the activated key).

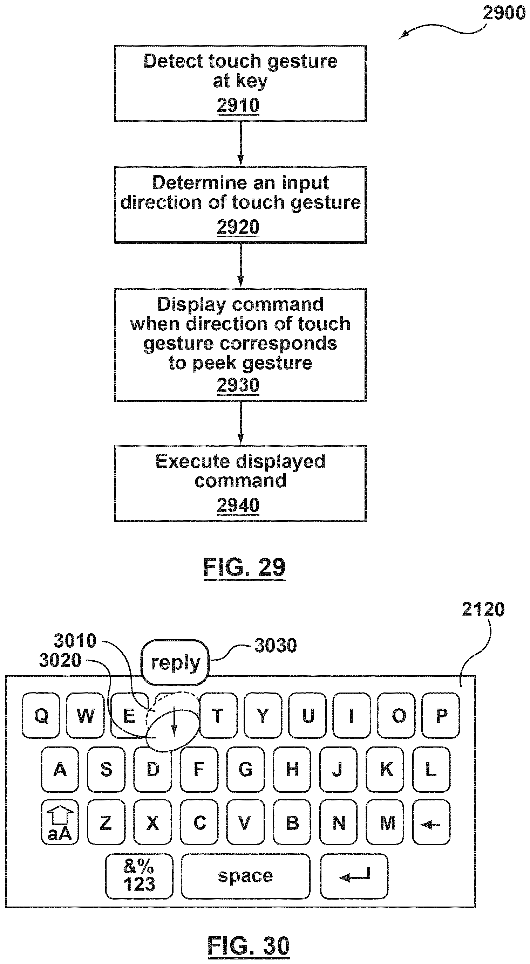

Fig. 29 shows in flowchart form a method 2900 in accordance with some example embodiments. The example method 2900 described herein can be implemented with a processor, such as main processor 102, and stored on a tangible computer readable medium, such as hard drives, CDs, DVDs, flash memory, and the like. At block 2910, the device detects a touch input at a key 2130 of the virtual keyboard 2120 in the form of a touch gesture.

At block 2920, the device determines the input direction of the touch input. In some examples, the input direction of the touch input corresponds to the direction of the touch gesture in relation to an initial contact point of the touch input.

At block 2930, when the direction of the touch motion corresponds to a peek gesture, a visual cue of a command associated with the key at which the touch input was detected (i.e., the activated key) is displayed. In some examples, the visual cue is displayed proximate to the activated key. In some examples, the visual cue is displayed proximate to the activated key and offset in a direction away from the input direction of the touch input as described similar to visual cues described previously.

In some examples, the peek gesture is a small touch gesture having a travel distance which is greater than a first threshold distance but less than a second threshold distance. The use of a small touch gesture in a given direction may be used to differentiate from the touch input from a longer touch gesture in the same direction which is associated with another action. The touch gesture, in some examples, may be a downward gesture (such as a downward swipe). In other examples, the peek gesture may be a small upward gesture (e.g., upward swipe). In other examples, the peek gesture may be any direction, pattern or combination of touch gestures such as a circular gesture around the key, or an L-shaped gesture comprising a downward gesture (e.g., swipe) followed by a left-to-right downward gesture (e.g., swipe).

Alternatively, in another embodiment, at block 2930, when the direction of the touch motion corresponds to a peek gesture, a visual cue of an alternate character associated with the key at which the touch input was detected (i.e., the activated key) is displayed rather than a visual cue of a command associated with the key.

At block 2940, the command associated with the activated key is executed by the device in response to a trigger. Alternatively, in other examples the alternate character associated with the key may be input in response to the trigger. The trigger may be that contact with virtual keyboard 2120 is released at or near an end of the peek gesture. In contrast, the command associated with the activated key is not executed if the contact point is moved back towards its initial position before being released, or is otherwise within a threshold distance of the initial position when contact with virtual keyboard 2120 is released. In other examples, the trigger is continuing the peek gesture until a second threshold distance has been travelled by the touch input. In yet other examples, the trigger is determining a duration of the touch input exceeds a threshold duration (also known as a touch-and-hold or press-and-hold). Typically, the touch-and-hold or press-and-hold is performed at or near an end of the peek gesture.

Fig. 30 shows an example of a virtual keyboard 2120 on which a user provides a touch gesture on the "R" key. Initially, the user touches the virtual keyboard 2120 at the initial contact point indicated by the reference 3010. While maintaining contact with the virtual keyboard 2120, the user moves the contact point downwards to the contact point indication by the reference 3020. In this example, the downward touch gesture corresponds to a peek gesture, and the device displays a visual cue in the form of a "reply" command icon 3030 which is associated with the "R" key. In the shown example, the command icon 3030 is displayed proximate to the associated key. In other examples in which predicted words are shown in a prediction bar, the command icon 3030 may be shown in the prediction bar.

As mentioned above, after the command icon 3030 is displayed, the command (e.g., reply command for replying a received communication such as an email) associated with the activated key is executed by the device in response to a trigger.

In the example shown in Fig. 30, the "R" key is associated with the "Reply" command. In the context of messaging, this command may reply to a sender of a currently selected or displayed email message. In some examples, different keys may be associated with different commands and in different contexts. In a messaging context, in some examples, the "R" key may be associated with the "Reply" command as noted above, the "L" key may be associated with the "Reply All" command to reply to all recipients of the currently selected or displayed email message, the "F" key may be associated the "Forward" command to forward the currently selected or displayed email message, the "S" key may be associated the "Send" command to send an open message under composition, the "N" key may be associated with a "Next Message" command to display a next message in a list (e.g., inbox or folder), a "P" key may be associated with a "Previous Message" command to display a previous message in a list (e.g., inbox or folder), or any combination thereof. Alternatively, the "Send" command for sending an electronic message may be associated with an "Enter" key in the virtual keyboard. In a text entry mode, which may be in a messaging context, the "Backspace" key may be associated with a "Delete" command for deleting an input character at the position of a cursor in an input field rather than the "Backspace" command for deleting an input character at a position before the position cursor in the input field.

In the example described above, a "Reply" command icon associated with the "Reply" command is displayed when the touch gesture is performed on the "R" key, a "Reply All" command icon associated with a "Reply All" command is displayed when the touch gesture is performed on the "L" key, a "Forward" command icon associated with a "Forward" command is displayed when the touch gesture is performed on the "F" key, a "Send" command icon associated with the "Send" is displayed when the touch gesture is performed on the "S" key (or possibly "Enter" key), a "Next Message" command icon associated with the "Next Message" is displayed when the touch gesture is performed on the "N" key, a "Previous Message" command icon associated with a "Previous Message" command is displayed when the touch gesture is performed on the "P" key, "Delete" command icon associated with the "Delete" command is displayed when the touch gesture is performed on the "Backspace" key.

In a navigating or browsing context, in some examples, the "N" key may be associated with a "Next Page" command for displaying a next page of content, "P" key may be associated with a "Previous Page" command for displaying a previous page of content, the "T" key may be associated with a "Top" command which displays a top portion of a currently displayed item (e.g., web page, document, list, electronic message etc.), the "B" key may be associated with a "Bottom" command which displays a bottom portion of the currently displayed item, or any combination thereof. Accordingly, a "Next Page" command icon associated with the "Next page command is displayed when the touch gesture is performed on the "N" key, a "Previous Page" command icon associated with the "Previous Page" command is displayed when the touch gesture is performed on the "P" key, a "Top" command icon associated with the "Top" command is displayed when the touch gesture is performed on the "T" key, and a "Bottom" command icon associated with the "Bottom" command is displayed when the touch gesture is performed on the "B" key.

Other keys may be associated with a command (a so-called key-command assignment), and may have a peek gesture associated with it in a similar manner to the example commands described above. The commands associated with the keys may be context dependent, for example, depending on an active mode or open application.

The virtual keyboard 2120 is typically displayed or invoked automatically in response to the display or selection of a text entry field. In some examples, the virtual keyboard 2120 may be toggled between a hidden state and a shown state in response to respective input such as, but not limited to, an onscreen virtual keyboard toggle button. In some examples, the virtual keyboard 2120 may be displayed or invoked out-of-context when no text entry field is present to permit the peek gestures and associated shortcuts for executing commands to be used. The associated shortcuts may be faster and more intuitive for some users compared with navigating a menu or other graphical user interface element to select the appropriate command. For example, users familiar with shortcuts on a device with a physical keyboard may be familiar with certain key-command associations and may be able to execute commands more quickly using the key-command associations via the virtual keyboard 2120, even if the virtual keyboard 2120 has to be invoked to access the keys and activate the shortcut commands. Advantageously, this solution can be used to leverage shortcuts conventionally used in devices having physical keyboards in a virtual way.

The visual cues described above are believed to have potential advantages in several respects which provide a more natural interaction with the device. Offsetting visual cues based on the input direction of the touch input, reduces or eliminates obscuring of the visual cue by an input implement (e.g., finger or stylus) and facilities interaction with the visual cue (e.g., tooltip). Moreover, in some instances, the visibility of the touch input feedback to the user may be improved. Providing more natural interaction with the device involves identifying efficient interactions (such as gestures) which are relatively easy to perform, relatively easy to remember, have discoverability which allows users to "discover" functions during normal use without formal training, and which can be differentiated from other interactions (such as gestures) by users (and by the device) relatively easily. Arbitrary or poorly considered interaction-action assignments (e.g., gesture-action assignments) tend to create awkward and unnatural user experiences which make the required interaction harder to perform, harder to remember, undiscoverable (or at least less discoverable), and harder to differentiate from other interactions by users.

Unlike a conventional physical keyboard, a virtual keyboard presents an opportunity for shortcuts, hot keys or other commands to be discovered by the user. This allows users to "discover" functions during normal use without formal training. The specific interaction-action assignments described herein are also believed to be relatively easy to perform, relatively easy to remember, have good discoverability, and which can be differentiated from other interactions by users (and by the device) relatively easily.

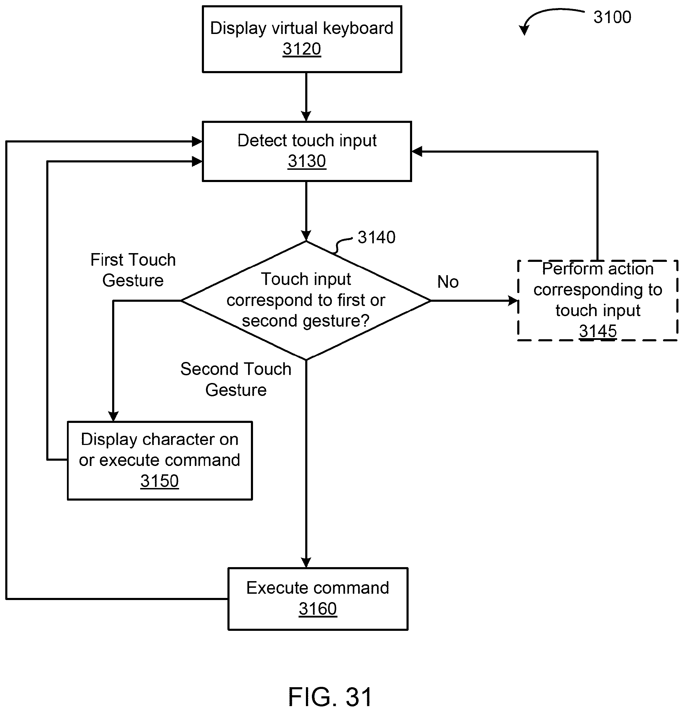

Fig. 31 is a flowchart of a method 3100 for input using a virtual keyboard rendered on a display of an electronic device 100 in accordance with one example embodiment of the present disclosure. The virtual keyboard has at least two input states but could have more than two input inputs. The method 3100 may be carried out, at least in part, by firmware or software executed by the processor 102. Coding of software for carrying out such a method 3100 is within the scope of a person of ordinary skill in the art provided the present disclosure. The method 3100 may contain additional or fewer processes than shown and/or described, and may be performed in a different order. Computer-readable code executable by the processor 102 to perform the method 3100 may be stored in a computer-readable medium such as the memory 110.

At 3120, a virtual keyboard is rendered and displayed on the touch-sensitive display 118. The virtual keyboard may be displayed automatically when an input field is displayed or may be called or invoked, for example, in response to corresponding input (such as activation of a keyboard button or icon). The virtual keyboard includes a plurality of keys including a plurality of character keys as previously described. Each key in the plurality of character keys corresponds to a character in an input character set. The input character set, in at least some examples, is an English alphanumeric character set. The plurality of character keys are arranged in a familiar QWERTY layout in the shown example but may be arranged in another suitable format in other examples. The virtual keyboard may be arranged in the same or similar configuration to those described above.

At block 3130, a touch input is detected on the touchscreen 118 at a location associated with a key.

At block 3140, the electronic device 100 determines a type of touch gesture of the detected touch input. In some examples, the electronic device 100 determines whether the touch input is a first type of gesture input or a second type of gesture. In some examples, the first type of gesture is a tap on or near the key and the second type of gesture is a swipe in a particular direction (e.g., down swipe) which has an initial contact point on or near the key.

At block 3150, when the touch input is a first type of gesture, a first input associated with the key is input. When the key is a character key, the first input is character input which corresponds to a character displayed in the key in the virtual keyboard. For example, tapping a character key inputs a character from an input character set associated with the key. The first input may be a command when the key is a non-character key (e.g., function key).

At optional block 3145, the electronic device 100 may perform an action if the touch input does not correspond to either the first touch gesture or second touch gesture but does correspond to other designated input (such as a third touch gesture). The action could be input of an alternative character or execution of an alternative command different than that associated with the first touch gesture and second touch gesture for the particular key.

At block 3160, when the touch input is a second type of gesture and a command is associated with the key and the second type of gesture, the command associated with the key is executed by the electronic device 100 is executed by the electronic device 100. Unlike the previously described example in Fig. 29, no visual cue of the command is provided.

In a messaging context, in some examples, the "R" key may be associated with the "Reply" command, the "L" key may be associated with the "Reply All" command, the "F" key may be associated the "Forward" command, the "S" key may be associated the "Send" command to send an open message under composition, the "N" key may be associated with the "Next Message" commands the "N", the "P" key may be associated with the "Previous Message" command, or any combination thereof. Alternatively, the "Send" command may be associated with the "Enter" key. In a text entry mode, which may be in a messaging context, the "Backspace" key may be associated with the "Delete" command.

In a navigating or browsing context, in some examples, the "N" key may be associated with the "Next Page", the "P" key may be associated with the "Previous Page" commands, the "T" key may be associated with the "Top" command, the "B" key may be associated with the "Bottom" command, or any combination thereof.

Other keys may be associated with a command (a so-called key-command assignment) in a similar manner to the example commands described above. The commands associated with the keys may be context dependent, for example, depending on an active mode or open application.

While the various methods of the present disclosure have been described in terms of functions shown as separate blocks in the Figures, the functions of the various blocks may be combined during processing on an electronic device. Furthermore, some of the functional blocks in the Figures may be separated into one or more sub steps during processing on an electronic device.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

**Claims**

**1.** A method for providing visual cues rendered on a display (112), comprising:

detecting a touch input associated with a user interface element rendered on the display (112), wherein the user interface element is a key of a virtual keyboard;
determining an input direction of the touch input, wherein the input direction is a direction from which a user has provided the touch input and provides a proxy for determining which of the user's hand is being used; and
displaying on the display (112) a visual cue associated with the user interface element, wherein the visual cue is located at a position in accordance with which of the user's hand is being used and wherein the visual cue is proximate to a touched key at a location, which is above and to the right of the touched key when the touch input is associated with the user's left hand; and wherein the visual cue is proximate to the touched key at a location, which is above and to the left of the touched key when the touch input is associated with the user's right hand.

**2.** The method of claim 1, wherein detecting the touch input comprises determining a shape of the touch input, and determining the input direction of the touch input comprises identifying a direction which matches the shape of the touch input.

3. The method of claim 2, wherein identifying a direction which matches the shape of the touch input comprises determining a major axis of a contact area of the touch input, and determining the input direction as a direction of the major axis in accordance with a screen orientation of the content displayed on the display or a device orientation of the display (112).

4. The method of claim 2 or claim 3, wherein identifying a direction which matches the shape of the touch input comprises identifying a touch profile which matches the shape of the touch input, and determining the input direction as a direction of the touch profile which matches the shape of the touch input.

5. The method of any one of claims 1 to 4, wherein determining the input direction of the touch input comprises one or a combination of:

   determining whether the touch input was detected at a left portion or a right portion of the display (112), detecting proximity of an object at or near the display at a time when the touch input was detected, and determining the input direction as left or right in accordance with a side of the display (112) at which proximity of an object was detected, or
   determining the input direction of the touch input comprises detecting an orientation of the display (112).

6. The method of any one of claims 1 to 5, wherein displaying the visual cue comprises displaying on the display (112) a character icon associated with the user interface element.

7. An electronic device, comprising:

   a touch-sensitive display (112);
   a processor configured to perform the method of any one of claims 1 to 6.

8. A computer program product comprising a computer readable medium having stored thereon computer program instructions for implementing a method for providing visual cues rendered on a display (112), the computer executable instructions comprising:

   computer executable instructions for detecting a touch input associated with a user interface element rendered on the display (112), wherein the user interface element is a key of a virtual keyboard;
   computer executable instructions for determining a direction from which a user has provided the touch input and which provides a proxy for determining whether the touch input is associated with a left hand or a right hand of a user; and
   computer executable instructions for displaying on the display (112) a visual cue associated with the user interface element, wherein the visual cue is proximate to a touched key at a location, which is above and to the right of the touched key when the touch input is associated with the user's left hand; and
   wherein the visual cue is proximate to the touched key at a location, which is above and to the left of the touched key when the touch input is associated with the user's right hand.

**Patentansprüche**

1. Verfahren zum Vorsehen von visuellen Hinweisen, die auf einer Anzeige (112) dargestellt werden, das aufweist:

   Erfassen einer Berührungseingabe, die mit einem Benutzerschnittstellenelement assoziiert ist, das auf der Anzeige (112) dargestellt wird, wobei das Benutzerschnittstellenelement eine Taste einer virtuellen Tastatur ist;
   Bestimmen einer Eingaberichtung der Berührungseingabe, wobei die Eingaberichtung eine Richtung ist, von der ein Benutzer die Berührungseingabe vorgesehen hat, und einen Proxy vorsieht zum Bestimmen, welche Hand des Benutzers benutzt wird; und
   Anzeigen auf der Anzeige (112) eines visuellen Hinweises, der mit dem Benutzerschnittstellenelement assoziiert ist, wobei sich der visuelle Hinweis an einer Position in Übereinstimmung damit befindet, welche Hand des Benutzers benutzt wird, und wobei der visuelle Hinweis in der Nähe einer berührten Taste an einer Position ist, die oberhalb und rechts von der berührten Taste ist, wenn die Berührungseingabe mit der linken Hand des Benutzers assoziiert ist; und

wobei der visuelle Hinweis in der Nähe der berührten Taste an einer Position ist, die oberhalb und links von der berührten Taste ist, wenn die Berührungseingabe mit der rechten Hand des Benutzers assoziiert ist.

2. Das Verfahren gemäß Anspruch 1, wobei das Erfassen der Berührungseingabe ein Bestimmen einer Form der Berührungseingabe aufweist und das Bestimmen der Eingaberichtung der Berührungseingabe ein Identifizieren einer Richtung aufweist, die mit der Form der Berührungseingabe übereinstimmt.

3. Das Verfahren gemäß Anspruch 2, wobei das Identifizieren einer Richtung, die mit der Form der Berührungseingabe übereinstimmt, ein Bestimmen einer Hauptachse eines Kontaktbereichs der Berührungseingabe und ein Bestimmen der Eingaberichtung als eine Richtung der Hauptachse in Übereinstimmung mit einer Bildschirmausrichtung des Inhalts, der auf der Anzeige angezeigt wird, oder einer Vorrichtungsausrichtung der Anzeige (112) aufweist.

4. Das Verfahren gemäß Anspruch 2 oder Anspruch 3, wobei das Identifizieren einer Richtung, die mit der Form der Berührungseingabe übereinstimmt, ein Identifizieren eines Berührungsprofils, das mit der Form der Berührungseingabe übereinstimmt, und ein Bestimmen der Eingaberichtung als eine Richtung des Berührungsprofils aufweist, das mit der Form der Berührungseingabe übereinstimmt.

5. Das Verfahren gemäß einem der Ansprüche 1 bis 4, wobei das Bestimmen der Eingaberichtung der Berührungseingabe eines oder eine Kombination aufweist aus:

   Bestimmen, ob die Berührungseingabe an einem linken Teil oder einem rechten Teil der Anzeige (112) erfasst wurde,
   Erfassen einer Nähe eines Objekts auf oder in der Nähe der Anzeige zu einem Zeitpunkt, als die Berührungseingabe erfasst wurde, und Bestimmen der Eingaberichtung als links oder rechts in Übereinstimmung mit einer Seite der Anzeige (112), bei der eine Nähe eines Objekts erfasst wurde, oder Bestimmen der Eingaberichtung der Berührungseingabe ein Erfassen einer Ausrichtung der Anzeige (112) aufweist.

6. Das Verfahren gemäß einem der Ansprüche 1 bis 5, wobei das Anzeigen des visuellen Hinweises ein Anzeigen eines Zeichensymbols, das mit dem Benutzerschnittstellenelement assoziiert ist, auf der Anzeige (112) aufweist.

7. Eine elektronische Vorrichtung, die aufweist:

   eine berührungsempfindliche Anzeige (112);
   einen Prozessor, der konfiguriert zum Durchführen des Verfahrens gemäß einem der Ansprüche 1 bis 6.

8. Ein Computerprogrammprodukt, das ein computerlesbares Medium mit darauf gespeicherten Computerprogrammanweisungen aufweist zum Implementieren eines Verfahrens zum Vorsehen von visuellen Hinweisen, die auf einer Anzeige (112) dargestellt werden, wobei die computerausführbaren Anweisungen aufweisen:

   computerausführbare Anweisungen zum Erfassen einer Berührungseingabe, die mit einem Benutzerschnittstellenelement assoziiert ist, das auf der Anzeige (112) dargestellt wird, wobei das Benutzerschnittstellenelement eine Taste einer virtuellen Tastatur ist;
   computerausführbare Anweisungen zum Bestimmen einer Richtung, von der ein Benutzer die Berührungseingabe vorgesehen hat, und die einen Proxy vorsieht zum Bestimmen, ob die Berührungseingabe mit einer linken Hand oder einer rechten Hand eines Benutzers assoziiert ist; und
   computerausführbare Anweisungen zum Anzeigen auf der Anzeige (112) eines visuellen Hinweises, der mit dem Benutzerschnittstellenelement assoziiert ist, wobei sich der visuelle Hinweis in der Nähe einer berührten Taste an einer Position befindet, die oberhalb und rechts von der berührten Taste ist, wenn die Berührungseingabe mit der linken Hand des Benutzers assoziiert ist; und
   wobei der visuelle Hinweis in der Nähe der berührten Taste an einer Position ist, die oberhalb und links von der berührten Taste ist, wenn die Berührungseingabe mit der rechten Hand des Benutzers assoziiert ist.


**Revendications**

1. Procédé pour fournir des repères visuels rendus sur un dispositif d'affichage (112), comprenant le fait :

   de détecter une entrée tactile associée à un élément d'interface utilisateur rendu sur le dispositif d'affichage (112), où.l'élément d'interface utilisateur est une touche d'un clavier virtuel ;
de déterminer une direction d'entrée de l'entrée tactile, où la direction d'entrée est une direction à partir de laquelle un utilisateur a fourni l'entrée tactile et fournit un proxy pour déterminer laquelle des mains de l'utilisateur est en train d'être utilisée ; et
d'afficher sur le dispositif d'affichage (112) un repère visuel associé à l'élément d'interface utilisateur, où le repère visuel est situé à une position conformément à laquelle des mains de l'utilisateur est en train d'être utilisée et où le repère visuel est à proximité d'une touche enfoncée à un emplacement, qui est au-dessus et à droite de la touche enfoncée lorsque l'entrée tactile est associée à la main gauche de l'utilisateur ; et
dans lequel le repère visuel est à proximité de la touche enfoncée à un emplacement, qui est au-dessus et à gauche de la touche enfoncée lorsque l'entrée tactile est associée à la main droite de l'utilisateur.

2. Procédé de la revendication 1, dans lequel la détection de l'entrée tactile comprend la détermination d'une forme de l'entrée tactile, et la détermination de la direction d'entrée de l'entrée tactile comprend l'identification d'une direction qui correspond à la forme de l'entrée tactile.

3. Procédé de la revendication 2, dans lequel l'identification d'une direction qui correspond à la forme de l'entrée tactile comprend la détermination d'un axe majeur d'une zone de contact de l'entrée tactile, et la détermination de la direction d'entrée en tant que direction de l'axe majeur conformément à une orientation d'écran du contenu affiché sur le dispositif d'affichage ou une orientation du dispositif d'affichage (112).

4. Procédé de la revendication 2 ou 3, dans lequel l'identification d'une direction qui correspond à la forme de l'entrée tactile comprend l'identification d'un profil tactile qui correspond à la forme de l'entrée tactile, et la détermination de la direction d'entrée en tant- que direction du profil tactile qui correspond à la forme de l'entrée tactile.

5. Procédé de l'une quelconque des revendications 1 à 4, dans lequel la détermination de la direction d'entrée de l'entrée tactile comprend l'une ou une combinaison de :

la détermination du fait que l'entrée tactile a été détectée au niveau d'une partie gauche ou d'une partie droite du dispositif d'affichage (112),
la détection d'une proximité d'un objet au niveau ou près du dispositif d'affichage à un moment où l'entrée tactile a été détectée, et la détermination de la direction d'entrée comme à gauche ou à droite conformément à un côté du dispositif d'affichage (112) auquel une proximité d'un objet a été détectée,
la détermination de la direction d'entrée de l'entrée tactile comprend la détection d'une orientation du dispositif d'affichage (112).

6. Procédé de l'une quelconque des revendications 1 à 5, dans lequel l'affichage du repère visuel comprend l'affichage sur le dispositif d'affichage (112) d'une icône de caractère associée à l'élément d'interface utilisateur.

7. Dispositif électronique, comprenant :

un dispositif d'affichage tactile (112) ;
un processeur configuré pour effectuer le procédé de l'une quelconque des revendications 1 à 6.

8. Produit de programme informatique comprenant un support lisible par ordinateur sur lequel sont stockées des instructions de programme informatique pour la mise en oeuvre d'un procédé pour fournir des repères visuels rendus sur un dispositif d'affichage (112), les instructions exécutables par ordinateur comprenant :

des instructions exécutables par ordinateur pour détecter une entrée tactile associée à un élément d'interface utilisateur rendu sur le dispositif d'affichage (112), où l'élément d'interface utilisateur est une touche d'un clavier virtuel ;
des instructions exécutables par ordinateur pour déterminer une direction à partir de laquelle un utilisateur a fourni l'entrée tactile et qui fournit un proxy pour déterminer si l'entrée tactile est associée à une main gauche ou à une main droite d'un utilisateur ; et
des instructions exécutables par ordinateur pour afficher sur le dispositif d'affichage (112) un repère visuel associé à l'élément d'interface utilisateur, où le repère visuel est à proximité d'une touche enfoncée à un emplacement, qui est au-dessus et à droite de la touche enfoncée lorsque l'entrée tactile est associée à la main gauche de l'utilisateur ; et
dans lequel le repère visuel est à proximité de la touche enfoncée à un emplacement, qui est au-dessus et à gauche de la touche enfoncée lorsque l'entrée tactile est associée à la main droite de l'utilisateur.

**FIG. 1**

200

```
┌─────────────────────┐
│   Receive input of  │─── 210
│      character      │
└─────────────────────┘
          │
          ▼
┌─────────────────────┐
│   Generate set of   │─── 220
│     characters      │
└─────────────────────┘
          │
          ▼
┌─────────────────────┐
│  Rank generated set │─── 230
│    of characters    │
└─────────────────────┘
          │
          ▼
┌─────────────────────┐
│   Determine which   │
│   generated set of  │─── 240
│ characters to display│
└─────────────────────┘
          │
          ▼
┌─────────────────────┐
│ Display generated set│
│of characters at or near│─── 250
│  corresponding keys │
└─────────────────────┘
```

**FIG. 2**

FIG. 3A

**FIG. 3B**

EP 2 653 955 B1

**FIG. 3C**

EP 2 653 955 B1

**FIG. 3D**

**FIG. 4A**

**FIG. 4B**

**FIG. 5**

EP 2 653 955 B1

**FIG. 6A**

**FIG. 6B**

**FIG. 6C**

EP 2 653 955 B1

**FIG. 7**

**FIG. 8A**

EP 2 653 955 B1

EP 2 653 955 B1

**FIG. 8B**

**FIG. 9**

**FIG. 10A**

**FIG. 10B**

EP 2 653 955 B1

FIG. 11A

**FIG. 11B**

EP 2 653 955 B1

**FIG. 12A**

EP 2 653 955 B1

**FIG. 12B**

**FIG. 13A**

EP 2 653 955 B1

**FIG. 13B**

EP 2 653 955 B1

FIG. 14A

**FIG. 14B**

118

1430

1440

The hospital staff careful

1420

1490

| Q | # | W | 1 | E | 2 | R | 3 | T | ( | Y | ) | U | _ | I | - | O | + | P |
|---|---|---|---|---|---|---|---|---|---|---|---|---|---|---|---|---|---|---|
|   |   | with |   |   |   |   |   |   |   |   |   |   |   |   |   | on |   |   |

1490

1492

| A | * | S | 4 | D | 5 | F | 6 | G | / | H | : | J | ; | K | ' | L | " | ⌫x |
|---|---|---|---|---|---|---|---|---|---|---|---|---|---|---|---|---|---|---|
|   |   |   |   |   |   |   |   |   |   |   |   |   |   |   |   | -ily |   |   |

1490

| ⇧aA | Z | 7 | X | 8 | C | 9 | V | $ | B | ? | N | ! | M | = | , | @ | ⇧aA |
|---|---|---|---|---|---|---|---|---|---|---|---|---|---|---|---|---|---|
|   |   |   |   |   | crossing |   |   |   |   |   |   |   |   |   |   |   |   |

| ⌨▽ | 123 sym | 🌐 0 | Space | . | Return |
|---|---|---|---|---|---|

1450

**FIG. 14C**

**FIG. 15**

EP 2 653 955 B1

**FIG. 16**

EP 2 653 955 B1

1700

Receive input of character — 1710

Display generated set of characters at or near corresponding keys on keyboard — 1720

1730

Receive input of generated set of characters?

No

Yes

Insert generated set of characters and <SPACE> — 1740

1750

Punctuation?

No

Yes

Delete <SPACE> and insert inputted punctuation — 1760

FIG. 17

1800

Receive input of
character — 1810

Display generated set of
characters at or near
corresponding keys on
keyboard — 1820

1830

No ← Receive
input of generated
set of
characters?

Yes

Insert generated set of
characters and <SPACE> — 1840

1850 — Display predicted set of
characters on space key

1860

No ← Receive
input of generated
set of
characters?

Yes

1870 — Insert predicted set of
characters and <SPACE>

FIG. 18

1900

1910

Display predicted set of characters at or near corresponding keys on keyboard

1920

Insert set of characters and <SPACE>

Yes

Receive input set of characters?

1930

No

1940

Receive input of characters

•
•
•

Other process

FIG. 19

**FIG. 20**

EP 2 653 955 B1

**FIG. 21**

EP 2 653 955 B1

2200

Detect touch input
at key
2210

Determine an input
direction of touch input
2220

Display a visual cue at
position based on the
input direction
2230

FIG. 22

**FIG. 23**

**FIG. 24**

**FIG. 25**

**FIG. 26**

FIG. 27

FIG. 28

2900

Detect touch gesture
at key
**2910**

↓

Determine an input
direction of touch gesture
**2920**

↓

Display command
when direction of touch
gesture corresponds
to peek gesture
**2930**

↓

Execute displayed
command
**2940**

**FIG. 29**

2120

3010
3020
reply — 3030

| Q | W | E | T | Y | U | I | O | P |

| A | S | D | F | G | H | J | K | L |

| aA | Z | X | C | V | B | N | M | ← |

| &%123 | space | ↵ |

**FIG. 30**

Display virtual keyboard
3120

3100

Detect touch input
3130

3140

First Touch
Gesture

Touch input
correspond to first or
second gesture?

No

Perform action
corresponding to
touch input
3145

Second Touch
Gesture

Display character on
or execute command
3150

Execute command
3160

FIG. 31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 37335611 A
- US 20090265669 A
- US 020080304890 A1
- US 20090085881 A1
- US 20070097096 A